(19) Europäisches Patentamt
European Patent Office
Office européen des brevets

(11) **EP 2 808 623 B1**

(12) **FASCICULE DE BREVET EUROPEEN**

(45) Date de publication et mention de la délivrance du brevet:
**08.08.2018 Bulletin 2018/32**

(51) Int Cl.:
***F25B 21/00*** *(2006.01)*

(21) Numéro de dépôt: **14169403.4**

(22) Date de dépôt: **22.05.2014**

(54) **Module pour réchauffer et, en alternance, pour refroidir**

Modul zum Heizen und alternativ zum Kühlen

Module for reheating and, alternately, for cooling

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2013 FR 1354739**

(43) Date de publication de la demande:
**03.12.2014 Bulletin 2014/49**

(73) Titulaire: **Commissariat à l'Énergie Atomique et aux Énergies Alternatives 75015 Paris (FR)**

(72) Inventeurs:
• **Defay, Emmanuel 38340 Voreppe (FR)**
• **Despesse, Ghislain 38340 Voreppe (FR)**
• **Mathur, Neil Cambridge CB4 3PU (GB)**

(74) Mandataire: **GIE Innovation Competence Group 310, avenue Berthelot 69372 Lyon Cedex 08 (FR)**

(56) Documents cités:
**WO-A1-2012/026924    SU-A1- 840 621
US-A- 2 635 431    US-A- 4 220 906
US-A1- 2012 056 504    US-B1- 6 877 325**

EP 2 808 623 B1

## Description

L'invention concerne un module et un procédé pour réchauffer et, en alternance, refroidir ainsi qu'un système de transfert d'énergie thermique incorporant ce module. L'invention a également pour objet un support d'enregistrement d'informations pour la mise en oeuvre du procédé.

Il a déjà été suggéré qu'il était possible d'utiliser un matériau électrocalorique pour transférer de la chaleur entre deux milieux thermiquement isolés l'un de l'autre. Par la suite, ces deux milieux thermiquement isolés l'un de l'autre sont appelés, respectivement, « milieu extérieur » et « milieu intérieur » ou « milieu chaud » et « milieu froid ». Le principe de fonctionnement d'un tel système est décrit dans l'article A1 suivant :

Y.V. Sinyavsky, N.D Pashkov, Y.M. Gorovoy et G.E Lugansky, « The optical ferroelectric ceramic as working boby for electrocaloric refrigeration », Ferroelectrics, 1989, Vol 90, pp213-217.

Ce système connu de transfert d'énergie thermique entre un milieu dit « chaud » et un milieu dit « froid » isolés thermiquement l'un de l'autre, comporte :

- au moins un module commandable pour réchauffer et, en alternance, pour refroidir,
- un dispositif de transport apte à raccorder thermiquement le module au milieu chaud lorsque ce module réchauffe et, en alternance, au milieu froid lorsque le module refroidit.

Dans le système connu, le dispositif de transport comporte

- un circuit fluidique contenant :

  • un échangeur thermique extérieur en contact direct avec le milieu extérieur,
  • un échangeur thermique intérieur en contact direct avec le milieu intérieur,
  • une première canalisation raccordant fluidiquement une sortie de l'échangeur thermique extérieur à une entrée de l'échangeur thermique intérieur,
  • une seconde canalisation raccordant fluidiquement une sortie de l'échangeur thermique intérieur à une entrée de l'échangeur thermique extérieur,
  • une pompe commandable apte à faire circuler dans un sens et, en alternance, dans un sens opposé, un fluide caloporteur à l'intérieur de ces canalisations,

- un premier module pour réchauffer et, en alternance, refroidir l'intérieur de la première canalisation de manière à refroidir et, en alternance, réchauffer le liquide caloporteur qui circule à l'intérieur de cette canalisation.

Ce système connu comprend également un second module pour réchauffer et, en alternance, refroidir l'intérieur de la seconde canalisation. Chacun de ces modules comprend un condensateur électrocalorique logé, respectivement, à l'intérieur des première et seconde canalisations pour être thermiquement raccordé avec le milieu à refroidir ou à réchauffer.

Un condensateur électrocalorique est un condensateur qui comporte deux électrodes isolées électriquement et mécaniquement l'une de l'autre par une couche en matériau diélectrique électrocalorique,

Toutefois, l'efficacité des modules utilisés dans ce système est faible. L'efficacité d'un module est définie comme étant le rapport entre la quantité utile d'énergie thermique produite sur la quantité d'énergie électrique utilisée pour produire cette quantité utile d'énergie thermique. La quantité utile d'énergie thermique est la quantité d'énergie thermique évacuée lorsqu'il s'agit de refroidir un milieu ou la quantité de chaleur produite lorsqu'il s'agit de réchauffer un milieu. A cause de cela, l'efficacité du système est très inférieure à celle, par exemple, des réfrigérateurs actuels et de l'efficacité maximale de Carnot.

De l'état de la technique est également connu de : US2635431A, SU840621A1, WO2012026924A1, US2012/056504A1 et US6877325B1.

L'invention vise à proposer un tel module dont l'efficacité est améliorée. Elle a donc pour objet un module conforme à la revendication 1.

Dans les modules connus, l'énergie électrique stockée dans le condensateur électrocalorique et qui n'a pas été utilisée pour modifier la température du matériau électrocalorique, n'est pas réutilisée. Le module selon l'invention, au contraire, est capable de transférer cette énergie électrique non utilisée vers un dispositif de stockage d'énergie électrique, puis, lors d'un cycle suivant, d'utiliser l'énergie électrique ainsi stockée pour augmenter la tension entre les électrodes du condensateur électrocalorique.

Ainsi, dans le module ci-dessus, au moins une partie de l'énergie électrique non utilisée pour modifier la température du matériau électrocalorique, est réutilisée lors du cycle suivant pour accroître la tension entre les électrodes de ce condensateur électrocalorique. Cela permet d'améliorer très nettement l'efficacité du module ci-dessus.

De plus, la présence de l'inductance entre le condensateur électrocalorique et le dispositif de stockage permet de limiter les pertes d'énergie dans le circuit de transfert et donc d'augmenter l'efficacité du module.

Les modes de réalisation de ce module peuvent comporter une ou plusieurs des caractéristiques des revendications dépendantes.

Ces modes de réalisation du module présentent en outre les avantages suivants :

- utiliser une source de tension continue raccordée en série avec le condensateur électrocalorique permet de charger progressivement ce condensateur électrocalorique lors de la mise en marche du module sans avoir recours à des tensions importantes, c'est-à-dire des tensions supérieures à 10 volts, puis, lors du fonctionnement du module, de compenser les pertes ;

- la présence d'une diode raccordée en parallèle du condensateur permet de démarrer le module même si la tension entre les électrodes du condensateur électrocalorique est nulle et si le dispositif de stockage d'énergie est également vide ;
- utiliser le premier et le second interrupteurs ci-dessus ainsi que la première et la seconde diodes ci-dessus permet de simplifier la commande puisqu'il n'est plus nécessaire de prédire précisément à quel instant le courant va changer de sens dans le circuit de transfert pour savoir à quel moment l'ouverture des interrupteurs doit être commandée ;
- utiliser en tant que dispositif de stockage d'énergie un dispositif ayant une capacité de stockage supérieure ou égale à celle du condensateur électrocalorique permet d'accroître l'efficacité car le condensateur électrocalorique peut alors être complètement déchargé, ce qui maximise la variation de température du matériau électrocalorique,
- utiliser en tant que dispositif de stockage d'énergie un condensateur électrocalorique permet de réchauffer un premier milieu tout en refroidissant, simultanément, un second milieu.

L'invention a également pour objet un système de transfert d'énergie thermique entre un milieu dit « chaud » et un milieu dit « froid » conforme à la revendication 8.

Les modes de réalisation de ce système peuvent comporter une ou plusieurs des caractéristiques des revendications dépendantes.

Ces modes de réalisation du système de transfert d'énergie présentent en outre les avantages suivants :

- l'utilisation en tant que dispositif de stockage d'énergie d'un autre condensateur électrocalorique simplifie la réalisation du système puisque chaque condensateur électrocalorique remplit alors les deux fonctions suivantes :

    - la fonction consistant à refroidir ou à réchauffer le fluide caloporteur, et
    - la fonction de dispositif de stockage de l'énergie électrique à réutiliser ;

- l'utilisation d'un mécanisme de déplacement du condensateur électrocalorique par rapport au milieu à réchauffer ou à refroidir évite d'avoir à utiliser un fluide caloporteur pour transférer de l'énergie calorique entre deux milieux thermiquement isolés.

L'invention a également pour objet un procédé pour réchauffer et, en alternance, refroidir conforme à la revendication 12.

Les modes de réalisation de ce procédé peuvent comporter une ou plusieurs des caractéristiques des revendications dépendantes de procédé.

Enfin, l'invention a également pour objet un support d'enregistrement d'informations comportant des instructions pour exécuter le procédé ci-dessus, lorsque ces instructions sont exécutées par un calculateur électronique.

L'invention sera mieux comprise à la lecture de la description qui va suivre, donnée uniquement à titre d'exemple non limitatif, et faite en se référant aux dessins sur lesquels :

- la figure 1 est une illustration schématique d'un système de transfert d'énergie thermique entre un milieu extérieur et un milieu intérieur ;
- la figure 2 est une illustration schématique et en coupe verticale d'un condensateur électrocalorique utilisé dans le système de la figure 1 ;
- la figure 3 est un chronogramme de l'évolution de la température d'un matériau électrocalorique du condensateur de la figure 2 au cours du temps ;
- la figure 4 est un schéma électronique simplifié d'un circuit de transfert utilisé dans le système de la figure 1 ;
- la figure 5 est un organigramme d'un procédé pour transférer de l'énergie thermique entre un milieu extérieur et un milieu intérieur à l'aide du système de la figure 1 ;
- la figure 6 est un chronogramme illustrant l'évolution au cours du temps de différentes tensions et intensité mesurables dans le système de la figure 1 ;
- les figures 7 et 8 sont des chronogrammes illustrant l'instant auquel des interrupteurs respectifs doivent être ouverts et fermés ;
- la figure 9 est un chronogramme illustrant l'évolution au cours du temps de la tension de sortie de deux sources de tension continue commandables ;
- les figures 10 et 11 sont des illustrations schématiques de deux autres modes de réalisation possibles du circuit de transfert de la figure 4 ;
- les figures 12 et 13 sont des chronogrammes illustrant, respectivement, l'évolution au cours du temps de tensions et de l'intensité d'un courant dans le circuit de transfert de la figure 11 et les instants de commande d'un interrupteur du circuit de transfert de la figure 11 ;
- la figure 14 est une illustration schématique d'un module utilisé pour limiter les variations de température d'un composant électronique ;
- la figure 15 est un organigramme d'un procédé pour limiter les variations de température d'un composant électronique à l'aide du module de la figure 14 ;
- la figure 16 est un chronogramme illustrant l'évolution au cours du temps d'une tension du module de la figure 14 et de la température d'un composant électronique ;

- les figures 17 et 18 sont des illustrations schématiques, en coupe verticale, d'un autre mode de réalisation d'un système de transfert d'énergie thermique entre deux milieux, et
- la figure 19 est une illustration schématique, en coupe verticale, d'un autre mode de réalisation du système des figures 17 et 18.

Dans ces figures, les mêmes références sont utilisées pour désigner les mêmes éléments.

Dans la suite de cette description, les caractéristiques et fonctions bien connues de l'homme du métier ne sont pas décrites en détail.

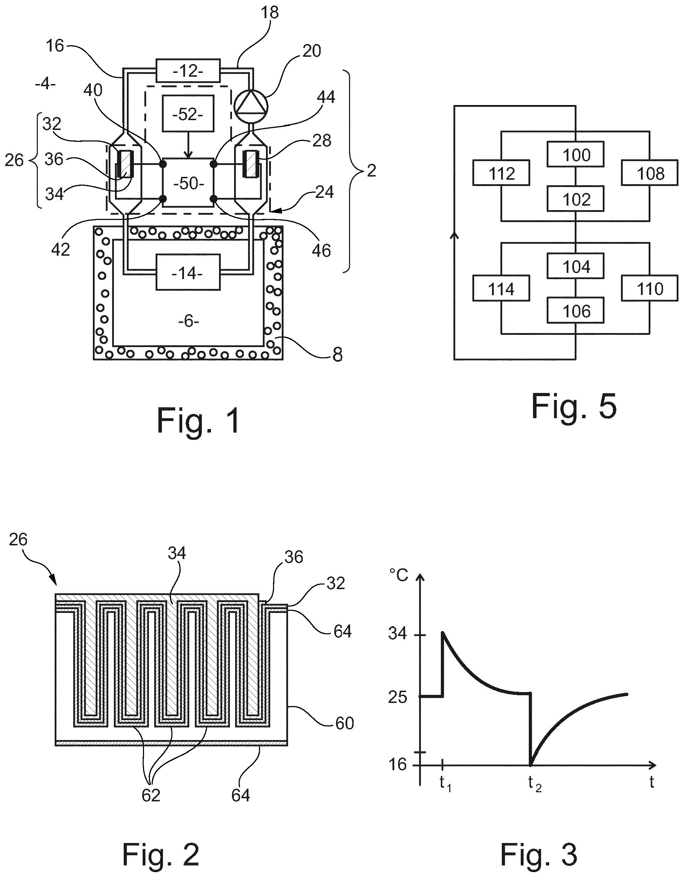

La figure 1 représente un système de transfert d'énergie thermique entre un milieu extérieur 4 et un milieu intérieur 6. Ici, les milieux 4 et 6 sont, par exemple, des milieux gazeux. Typiquement, les milieux 4 et 6 sont de l'air.

Par la suite, le système 2 est décrit dans le cas particulier où il est utilisé pour refroidir le milieu 6 par rapport au milieu 4.

Le milieu 6 est isolé mécaniquement et thermiquement du milieu 4. A titre d'illustration, le milieu 6 est situé à l'intérieur d'un caisson 8. Pour cette raison, par la suite, le milieu 6 est également appelé « milieu intérieur » tandis que le milieu 4 est appelé « milieu extérieur ».

Ce caisson 8 délimite une enceinte étanche au milieu 6. Typiquement, le caisson 8 est réalisé dans un matériau mauvais conducteur thermique. Par matériau « mauvais conducteur thermique », on désigne ici les matériaux dont la conductivité thermique est typiquement inférieure à $1\ W.m^{-1}.k^{-1}$ et, de préférence, inférieure à $0,1\ W.m^{-1}.k^{-1}$.

Ce système comporte un dispositif de transport pour transporter de la chaleur depuis le milieu 6 vers le milieu 4. Ici, ce dispositif de transport est un circuit fluidique comportant :

- un échangeur thermique extérieur 12 directement en contact mécanique avec le milieu 4,
- un échangeur thermique intérieur 14 directement en contact mécanique avec le milieu 6,
- des canalisations 16, 18 reliant fluidiquement les échangeurs 12 et 14 entre eux,
- un fluide caloporteur qui circule à l'intérieur des échangeurs 12, 14 et des canalisations 16,18, et
- une pompe 20 pour faire circuler, dans un sens et, en alternance, dans le sens opposé le fluide caloporteur à l'intérieur des canalisations 16 et 18.

Les échangeurs 12 et 14 sont conformés pour permettre un échange efficace de chaleur entre le milieu dans lequel il est plongé et le fluide caloporteur. Par exemple, ils comportent chacun un radiateur avec des ailettes.

Ici, les échangeurs 12 et 14 sont plongés, respectivement, dans les milieux 4 et 6. L'échangeur 14 est donc situé à l'intérieur du caisson 8 tandis que l'échangeur 12 est situé à l'extérieur de ce caisson 8.

Chaque échangeur comporte une entrée et une sortie de fluide caloporteur. Ici, l'entrée de l'échangeur 12 est directement raccordée fluidiquement par la canalisation 18 à la sortie de l'échangeur 14. L'entrée de l'échangeur 14 est directement raccordée fluidiquement à la sortie de l'échangeur 12 par l'intermédiaire de la canalisation 16.

Les canalisations 16 et 18 traversent une paroi du caisson pour raccorder fluidiquement les échangeurs 12 et 14 entre eux.

Le fluide caloporteur est par exemple un liquide dont la capacité thermique volumique est supérieure à $2000\ kJ.m^{-3}.K^{-1}$. Par exemple, il s'agit de l'eau.

La pompe 20 commande le sens de circulation du fluide caloporteur à l'intérieur des canalisations 16 et 18. Ici, cette pompe 20 est raccordée à la canalisation 18.

Dans ce mode de réalisation particulier, lorsque le fluide caloporteur situé à l'intérieur de la canalisation 16 doit être réchauffé, le fluide caloporteur situé à l'intérieur de la canalisation 18 doit être refroidi et vice versa. A cet effet, le système 2 comprend un seul module 24. Le module 24 comporte deux condensateurs électrocaloriques 26 et 28 reliés électriquement l'un à l'autre par l'intermédiaire d'un circuit 50 commandable de transfert d'énergie électrique. Ici, ces condensateurs 26 et 28 sont utilisés pour refroidir et, en alternance réchauffer le fluide caloporteur qui circule, respectivement, à l'intérieur des canalisations 16 et 18. Par exemple, à cet effet, les condensateurs 26 et 28 sont logés à l'intérieur, respectivement, des canalisations 16 et 18.

Dans ce mode de réalisation, à part cette différence d'emplacement, les condensateurs 26 et 28 sont structurellement identiques. Ainsi, par la suite, seul le condensateur 26 est décrit en détail.

La structure du condensateur 26 est uniquement représentée schématiquement sur la figure 1. Un mode de réalisation plus détaillé de cette structure est représenté sur la figure 2.

Le condensateur 26 comporte deux électrodes métalliques 32, 34 isolées mécaniquement et électriquement l'une de l'autre par une couche 36 en matériau diélectrique. En plus d'être réalisé dans un matériau bon conducteur électrique, les électrodes 32 et 34 sont également réalisées dans un matériau bon conducteur thermique. Dans cette description, on considère qu'un matériau est bon conducteur thermique si sa conductivité thermique à 22°C est supérieure à $2\ W.m^{-1}.K^{-1}$ et, de préférence, supérieure à 10 ou $50\ W.m^{-1}.K^{-1}$. Par exemple, les électrodes 32, 34 sont réalisées en métal tel que du platine, du nickel, de l'or, du cuivre, de l'argent ou du palladium. En variante, ces électrodes sont réalisées à l'aide d'un alliage à base d'oxyde. Par exemple, de préférence, les électrodes sont réalisées en $RuO_2$, $SiRuO_3$, $IrO_3$ ou $LaNiO_3$. En effet, la saturation en oxygène de ces électrodes permet de limiter la fatigue et l'usure du condensateur.

Les électrodes 32 et 34 se présentent sous la forme d'une couche d'épaisseur $e_e$ sensiblement constante. Typiquement, l'épaisseur $e_e$ est supérieure à 10 nm ou 0,1 $\mu$m et inférieure à 10 $\mu$m ou 5 $\mu$m.

Au moins l'une de ces électrodes 32, 34 et, de préférence les deux électrodes, sont en contact thermique par conduction avec le fluide caloporteur qui circule à l'intérieur de la canalisation 16. On considère qu'il y a un contact thermique par conduction :

a) si l'électrode est directement en contact mécanique et thermique avec le fluide caloporteur, ou
b) si l'électrode est thermiquement reliée au liquide caloporteur par l'intermédiaire d'un matériau bon conducteur thermique.

Dans ce mode de réalisation, les électrodes 32, 34 sont directement en contact mécanique avec le liquide caloporteur situé à l'intérieur de la canalisation 16.

Pour permettre de refroidir le liquide caloporteur, la couche 36 est réalisée dans un matériau qui est à la fois diélectrique et électrocalorique. Un matériau électrocalorique est un matériau dont la température change brusquement en réponse à l'application d'un champ électrique. Plus précisément, un matériau électrocalorique est un matériau dont la variation de température est fonction, typiquement une fonction bijective, de la valeur absolue du champ électrique.

Le comportement d'un matériau électrocalorique positif en réponse au champ électrique est illustré sur la figure 3. La température du matériau est initialement égale à la température ambiante, c'est-à-dire dans le cas illustré sur la figure 3 à 25°C. Dans l'état initial, le matériau électrocalorique n'est pas placé à l'intérieur d'un champ électrique.

A l'instant $t_1$, un champ électrique est appliqué. Cela provoque immédiatement une augmentation $\Delta T$ de la température de ce matériau de plusieurs degrés. Dans le cas illustré, $\Delta T$ est égal à 9°C. Ensuite, le champ électrique est maintenu constant entre les instants $t_1$ et $t_2$. Dans ces conditions, la température du matériau électrocalorique diminue par échange de chaleur avec l'environnement extérieur jusqu'à ce que sa température devienne égale à la température ambiante de l'environnement extérieur.

A l'instant $t_2$, le champ électrique est supprimé lorsque la température du matériau électrocalorique est redevenue égale à la température ambiante. En réponse, la température du matériau électrocalorique baisse immédiatement de $-\Delta T$. Ensuite, la température du matériau électrocalorique augmente par échange de chaleur avec l'environnement extérieur jusqu'à redevenir égale à la température ambiante. On est alors revenu dans l'état initial. Comme l'illustre le schéma de la figure 3, un matériau électrocalorique est donc utilisable pour réchauffer et, en alternance, refroidir temporairement le fluide caloporteur.

Ici, le matériau électrocalorique dont le fonctionnement vient d'être décrit est un matériau électrocalorique « positif », c'est-à-dire que sa température augmente quand on applique un champ électrique. Il existe aussi des matériaux électrocaloriques négatifs dont la température diminue quand on applique un champ électrique. Dans ce mode de réalisation, la couche 36 est réalisée dans un matériau électrocalorique positif.

Les matériaux électrocaloriques sont bien connus depuis longtemps. Toutefois, ce n'est que récemment qu'il a été découvert que les performances de ces matériaux électrocaloriques pouvaient être considérablement améliorées si on les utilisait sous forme de couches minces. Ici, on considère qu'une couche en matériau est mince si son épaisseur est inférieure à 500 $\mu$m ou 50 $\mu$m et, de préférence, inférieure à 15 $\mu$m ou 10 $\mu$m ou 5 $\mu$m. On pourra se référer à ce sujet à l'article A2 suivant :
A.F. Mischenko, Q. Zhang, J.F. Scott, R.W. Whatmore, N.D. Mathur, « Giant electrocaloric effect in thin-film PbZr0,95 Ti0,05 O3 », 3 mars 2006, volume 311, science.

Plus récemment encore, il a été mis en évidence que l'on pouvait atteindre des variations $\Delta T$ de température proche de 40°C dans certains matériaux électrocaloriques. On peut se référer à ce sujet à l'article A3 suivant :
S.G. Lu, B.R. Rozic, Q.M. Zhang, Z.Kutnjak, Xinyu Li, E. Furman, Lee J. Gorny et al. « Organic and inorganic relaxor ferroelectrics with giant electrocaloric effect », AppliedPhysics Letters 97, 162904 (2010).

Dans cette description, on considère que la couche 36 est réalisée en matériau électrocalorique si sa variation maximale $\Delta Tmax$ de température en réponse à un champ électrique est au moins de 5°C et, de préférence, d'au moins 10°C.

La variation $\Delta T_{max}$ de température se produit à proximité d'une température, appelée ici « température de transition ». Cette température de transition est différente pour chaque matériau électrocalorique. La température de transition de chaque matériau électrocalorique est connue. Par exemple, on pourra se référer à ce sujet à la table 1 de l'article A3 pour quelques exemples de valeurs de température de transition.

Ici, le matériau de la couche 36 est choisi pour présenter une température de transition égale à une température $T_a$ à plus ou moins 5 ou 2,5 ou une fois la variation $\Delta T_{max}$ de ce matériau près. La température $T_a$ est choisie en fonction des températures $T_e$ et $T_i$, respectivement, des milieux 4 et 6, normalement rencontrées lors de l'utilisation du système 2. Par exemple, la température $T_a$ est choisie égale à la température $T_i$ ou à la température $T_e$ ou à la moyenne des températures $T_e$ et $T_i$. Ici, on suppose donc que cette température $T_a$ est égale à 25°C. A titre d'illustration seulement, cela peut donc conduire à choisir comme matériau électrocalorique, le $[Pb(Mg_{1/3}Nb_{2/3})O_3]_{0,93}$-$[PbTiO_3]_{0,07}$. Ce

matériau est par exemple décrit plus en détail dans l'article A4 suivant :

T.M. Correia, J.S. Young, R.W. Whatmore, J.F. Scott, N. D. Mathur et Q. Zhang,Applied Physics Letters 95, 182904 (2009).

Toutefois, pour d'autres températures $T_a$, d'autres choix sont possibles pour le matériau électrocalorique. Typiquement, le matériau électrocalorique de la couche 36 est choisi dans le groupe composé de :

- Pb(Zr,Ti)O$_3$ connu sous l'acronyme PZT,
- (Pb,La)(Zr,Ti)O$_3$ connu sous l'acronyme de PLZT,
- Pb(Mg,Nb,Ti)O$_3$ connu sous l'acronyme de PMN-PT,
- (Ba,Sr)TiO$_3$ connu sous l'acronyme de BST,
- SrBi$_2$Ta$_2$O$_9$ connu sous l'acronyme de SBT,
- PVDF (Polyfluorure de vinylène) tel que le P(VDF-TrFE) ou P(VDF-TrFE-CFE).

Pour avoir une grande capacité à absorber de la chaleur avec une couche mince en matériau électrocalorique, il a été proposé d'agencer les électrodes 32 et 34 et la couche 36 sous forme d'un condensateur multicouche plus connu sous l'acronyme MLC (Multi-Layer Capacitor). On pourra se référer à ce sujet à l'article A5 suivant :

S. Kar-Narayan et N.D. Mathur, « Predicted cooling powers for multilayer capacitors based on various electrocaloric and electrode materials », Applied Physics Letters 95, 242903 (2009).

Ici, le condensateur 26 est un condensateur multicouche dont l'épaisseur de la couche 36 est inférieure à 5 ou 2μm. Par exemple, l'épaisseur de la couche 36 est comprise entre 10 nm et 10 μm et, de préférence, entre 10 nm et 2 μm ou entre 100 nm et 2 μm.

Les électrodes 32 et 34 du condensateur 26 sont électriquement raccordées à des bornes 40, 42 du circuit 50. Les électrodes 32 et 34 du condensateur 28 sont électriquement raccordées à des bornes 44, 46 de ce circuit 50.

Les condensateurs 26 et 28 fonctionnent aussi comme des condensateurs classiques et sont donc capables de stocker de l'énergie électrique. La quantité d'énergie électrique stockée dans chacun de ces condensateurs est typiquement approximativement égale à :

$$\int_{E_{min}}^{E_{max}} \varepsilon * E dE$$

où :

- $E_{max}$ et $E_{min}$ sont, respectivement, les valeurs maximale et minimale du champ électrique E appliqué entre les électrodes 32 et 34,
- $\varepsilon$ est la constante diélectrique de la couche 36, $\varepsilon$ peut dépendre du champ électrique appliqué,
- E est la variable « champ électrique ».

Le circuit 50 permet de transférer à des instants prédéterminés l'énergie électrique stockée dans le condensateur 26 vers le condensateur 28 et vice versa. A cet effet, le circuit 50, en réponse à des commandes, est basculable entre les trois états suivants :

- un état de récupération d'énergie électrique,
- un état bloqué, et
- un état de restitution d'énergie électrique.

Dans l'état de récupération d'énergie électrique, l'électricité stockée dans le condensateur 26 est transférée vers le condensateur 28. Pour cela, des interrupteurs du circuit 50 sont commandés de manière à autoriser uniquement la circulation du courant du condensateur 26 vers le condensateur 28. Ce transfert d'énergie électrique provoque ainsi une chute de la tension entre les électrodes du condensateur 26 et une augmentation de la tension entre les électrodes du condensateur 28. On obtient donc simultanément une baisse de la température du matériau électrocalorique du condensateur 26 et une augmentation de la température du matériau électrocalorique du condensateur 28.

Dans cet état, une partie de l'énergie électrique stockée dans les condensateurs est utilisée pour modifier la température des matériaux électrocaloriques. Aujourd'hui, il est estimé qu'environ 5 % de l'énergie électrique fournie aux condensateurs électrocaloriques est utilisé pour refroidir ou réchauffer les matériaux électrocaloriques. Le reste de l'énergie électrique fournie aux condensateurs électrocaloriques reste sous forme d'énergie électrique.

Dans l'état bloqué, les condensateurs 26 et 28 sont électriquement isolés de manière à stocker de l'énergie électrique entre leurs électrodes respectives. Ils ne sont donc pas traversés par un courant électrique et aucun courant électrique ne circule entre les condensateurs 26 et 28. Dans cet état bloqué, la diminution de l'énergie stockée dans chacun des condensateurs est uniquement due aux imperfections de ces condensateurs comme, par exemple, l'existence d'une résistance de fuite entre les électrodes des condensateurs.

Dans l'état de récupération, l'énergie électrique stockée dans le condensateur 28 est transférée vers le condensateur 26. Ceci provoque une augmentation de la tension entre les électrodes 32 et 34 du condensateur 26 et, simultanément, une diminution de la tension entre les électrodes du condensateur 28. On obtient donc ainsi une augmentation de la température du matériau électrocalorique du condensateur 26 et, dans le même temps, une diminution de la température du matériau électrocalorique du condensateur 28. Pour cela, le circuit 50 est commandé pour autoriser la circulation du courant uniquement du condensateur 28 vers le condensateur 26.

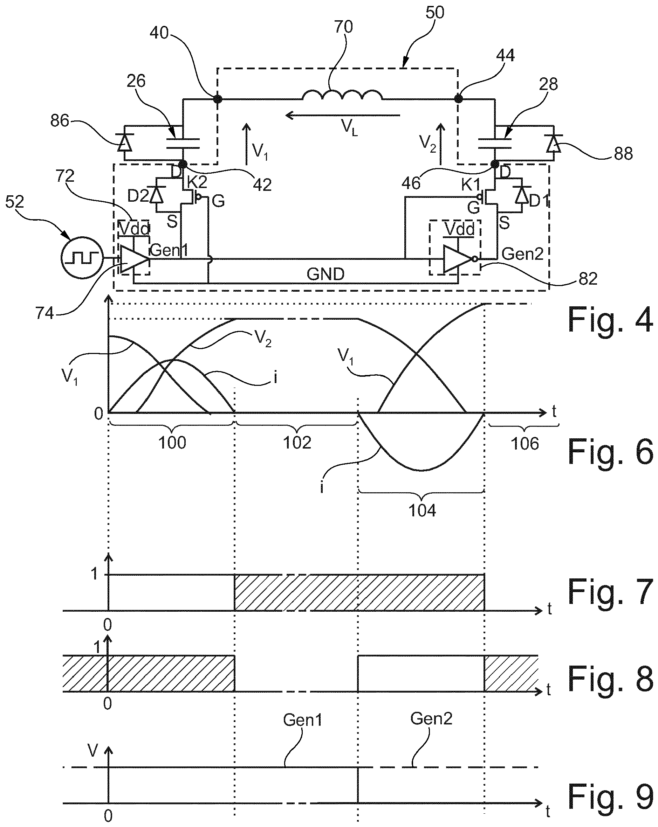

Un mode de réalisation plus détaillé du circuit 50 est décrit en référence à la figure 4. Pour commander le circuit 50, le système 2 comporte également une unité 52 de commande.

La figure 2 représente plus en détail un mode de réalisation du condensateur 26. Le condensateur 26 comporte un substrat 60 s'étendant essentiellement dans un plan horizontal. Des tranchées 62 verticales sont gravées depuis la face supérieur du substrat 60. Par exemple, le substrat 60 est un substrat plan en silicium. La largeur des tranchées 62 est typiquement comprise entre 0,5 et 30 $\mu$m et, de préférence, inférieure à 5 ou 2 $\mu$m. Ici, les largeurs des tranchées sont égales à 1 $\mu$m. La section horizontale des tranchées 62 peut être quelconque. Par exemple, elle peut être circulaire ou rectangulaire.

La profondeur des tranchées est typiquement comprise entre 1 $\mu$m et 500 $\mu$m et, de préférence, entre 50 $\mu$m et 100 $\mu$m. Ici, la profondeur est égale à 100 $\mu$m.

Une couche barrière 64 est déposée à l'intérieur des tranchées 62 pour empêcher la diffusion non souhaitée d'espèces chimiques vers le substrat 60. Par exemple, la couche barrière 64 est réalisée par une oxydation thermique du substrat 60. L'épaisseur de cette couche barrière 64 est typiquement comprise entre 10 nm et 5 $\mu$m et, de préférence, entre 50 nm et 150 nm. Ici, l'épaisseur est égale à 100 nm.

L'électrode 32 est déposée sur la couche barrière 64. Ici, l'épaisseur de l'électrode 32 est comprise entre 10 nm et 5 $\mu$m. Dans ce cas, elle est égale à 100 nm.

La couche 36 de matériau électrocalorique est déposée sur l'électrode 32. Ici, l'épaisseur de la couche 36 est comprise entre 10 nm et 5 $\mu$m.

L'électrode 34 est déposée sur la couche 36.

L'électrode 34 et la couche 36 sont partiellement gravées de manière à mettre à nu une portion de l'électrode 32 et ainsi permettre son raccordement électrique à la borne 42.

La figure 4 représente un exemple de mode de réalisation du circuit 50 et de l'unité 52 de commande.

Le circuit 50 comporte une inductance 70 directement raccordée entre les bornes 40 et 44. Grâce à cette inductance 70, le circuit 50 combiné aux condensateurs 26 et 28 forme un circuit LC. Ceci limite les pertes d'énergie électrique lors du transfert de cette énergie entre les condensateurs à moins de 10 % de l'énergie électrique transférée. Typiquement, les pertes d'énergie électrique sont inférieures à 5 % et, de préférence, inférieures à 2 % de l'énergie électrique transférée.

La valeur de l'inductance 70 est choisie en fonction des capacités des condensateurs 26 et 28 de sorte que le temps mis pour décharger ces condensateurs soit typiquement supérieur à 10 $\mu$s et, de préférence, supérieur à 30 $\mu$s.

La valeur de l'inductance 70 peut également être choisie pour limiter l'intensité du courant i qui la traverse.

Un interrupteur commandable K2 est directement raccordé électriquement entre la borne 42 et une sortie d'une source commandable 72 de tension continue. Cet interrupteur K2 est commutable, en réponse à une commande, entre une position ouverte dans laquelle il s'oppose au passage du courant électrique et une position fermée dans laquelle il laisse passer le courant i. Par la suite, lorsqu'on commute un interrupteur de sa position fermée vers sa position ouverte, on dit qu'on ouvre l'interrupteur. A l'inverse, lorsqu'on commute l'interrupteur de sa position ouverte vers sa position fermée, on dit qu'on ferme cet interrupteur.

Dans ce mode de réalisation particulier, l'interrupteur K2 est un transistor PMOS (« P-channel Metal-Oxide-Semiconductor Field-Effect Transistor ») dont la source S est directement raccordée à la sortie de la source 72 de tension et dont le drain D est directement raccordé à la borne 42. La grille G de ce transistor est directement raccordée à la masse GND.

Une diode D2 est raccordée entre le drain et la source de l'interrupteur K2. La cathode de cette diode D2 est directement raccordée à la borne 42. La diode D2 peut être la diode parasite qui existe entre la source et le drain d'un transistor PMOS. Il peut aussi s'agir d'une diode supplémentaire raccordée entre la source et le drain du transistor PMOS.

La source 72 de tension est ici réalisée à l'aide d'un amplificateur 74 dont la sortie Gen1 est directement raccordée à la source de l'interrupteur K2. Cet amplificateur 74 est alimenté par un potentiel de référence Vdd strictement supérieur à zéro.

L'entrée de l'amplificateur 74 est raccordée à une sortie de l'unité 52 de commande. Dans ces conditions, la source 72 génère une tension continue sur la sortie Gen1 proportionnelle au signal de commande généré par l'unité 52.

Un interrupteur commandable K1 est directement raccordé entre la borne 46 et une sortie Gen2 d'une source 82 de tension commandable. Ici, l'interrupteur K1 est structurellement identique à l'interrupteur K2. Son drain D est directement raccordé à la borne 46 et sa source S directement raccordée à la sortie Gen2. Sa grille G est directement raccordée à la sortie Gen1 de la source 72 de tension.

La source 82 est commandée par l'unité 52. A cet effet, ici, elle est réalisée comme la source 72 sauf que l'amplificateur utilisé est un amplificateur inverseur. L'entrée de cet amplificateur inverseur est directement raccordée à la sortie Gen1 pour générer sur la sortie Gen2 une tension déphasée de 180° par rapport à la tension présente sur la sortie Gen1.

L'unité 52 est programmée pour exécuter le procédé de la figure 5. Par « programmé », on désigne aussi bien une implémentation du programme sous forme matérielle que sous forme logicielle. Ici, l'unité 52 est un générateur d'un signal d'horloge. Ce signal d'horloge est un signal périodique dont la forme d'onde est un signal rectangulaire ou en créneau. Un tel signal comporte une succession de plateaux pendant lesquels la tension continue générée est constante et strictement supérieure à zéro. Dans ce signal, deux plateaux immédiatement consécutifs sont uniquement séparés par une vallée pendant laquelle la tension est nulle. Ici, la durée des plateaux est choisie égale à la durée des vallées. Dans ces conditions, le rapport cyclique du signal de commande est alors égal à 0,5.

La période T du signal de commande est strictement supérieure à 100 ms et, de préférence, supérieure à 1 s ou 5 s ou 10 s de manière à ce que l'état bloqué dure plus de 100 ms et, de préférence, plus de 1 s ou 5 s ou 10 s. En effet, une durée assez longue pour l'état bloqué est nécessaire pour laisser aux condensateurs 26, 28 le temps nécessaire pour refroidir ou réchauffer le fluide caloporteur.

Ici, l'unité 52 commande également la pompe 20 pour :

- faire circuler le fluide caloporteur de l'échangeur 12 vers l'échangeur 14 à travers la canalisation 16 uniquement quand la température du condensateur 26 est inférieure à la température $T_e$, et
- pour faire circuler le fluide caloporteur de l'échangeur 12 vers l'échangeur 14 à travers la canalisation 18 uniquement quand la température du condensateur 28 est inférieure à la température $T_e$.

Enfin, des diodes 86 et 88 sont raccordées en parallèle, respectivement, des condensateurs 26 et 28. Ces diodes 86 et 88 ont pour fonction d'empêcher que la tension devienne négative entre les électrodes de ces condensateurs 26 et 28. La cathode des diodes 86 et 88 est directement raccordée à l'inductance 70.

Le fonctionnement du système 2 va maintenant être décrit à l'aide du procédé de la figure 5 et des chronogrammes des figures 6 à 9.

La figure 6 représente, pour un cycle de commande, l'évolution au cours du temps de l'intensité du courant i et des tensions $V_1$ et $V_2$, respectivement, entre les électrodes des condensateurs 26 et 28.

La chronologie des commandes des interrupteurs K1 et K2 sont représentées sur les figures, respectivement, 7 et 8. Sur ces figures, les valeurs 0 et 1 correspondent, respectivement, aux positions ouverte et fermée de l'interrupteur. Les zones hachurées indiquent les zones où la position ouverte ou fermée de l'interrupteur n'a pas d'importance.

Le cycle de commande débute par une étape 100 lors de laquelle l'unité 52 commande la fermeture de l'interrupteur K1 lorsque le condensateur 26 est chargé et que le condensateur 28 est déchargé. Cela permet de faire passer le circuit 50 dans l'état de récupération. Pour cela, ici, une tension grille-source $V_{GS}$ négative est appliquée entre la grille et la source de l'interrupteur K1 pour le fermer. En réponse, le condensateur 26 se décharge à travers l'inductance 70 et le condenseur 28 se charge. Le courant i circule à travers la diode D2 et l'interrupteur K1. La tension $V_1$ entre les électrodes du condensateur 26 diminue et la tension $V_2$ entre les électrodes du condensateur 28 augmente. Par conséquent, la température de la couche 36 du condensateur 26 diminue et la température de la couche 36 du condensateur 28 augmente.

Dans l'état de récupération, si la tension $V_1$ devient négative, la diode 86 se met à conduire pour maintenir la tension $V_1$ égale zéro. De façon similaire, la diode 88 se met à conduire pour empêcher l'apparition d'une tension $V_2$ négative entre les électrodes du condensateur 28.

Quand le condensateur 26 a fini de se décharger, l'intensité du courant i s'annule car l'interrupteur K2 est dans sa position ouverte et la diode D2 empêche que le courant i change de sens. On passe ainsi automatiquement, lors d'une étape 102, dans l'état bloqué quand le condensateur 26 a fini de se décharger. Dans cet état bloqué, la position de l'interrupteur K1 n'a pas d'importance car c'est la diode D2 qui empêche la circulation du courant i. Par contre, l'interrupteur K2 doit être dans sa position ouverte. En effet, seul le passage de l'interrupteur K2 de sa position ouverte vers sa position fermée permet de décharger le condensateur 28 vers le condensateur 26.

La durée de l'étape 100 est très courte, c'est-à-dire qu'elle dure moins de 100 ms et, typiquement, moins de 1 ms ou 100 μs. Sa durée est donc insuffisante pour permettre au condensateur 26 de refroidir, par transfert thermique, le fluide caloporteur situé à l'intérieur de la canalisation 16. Dès lors, pour permettre cela, le circuit 50 reste dans l'état bloqué pendant une durée supérieure à 100 ms et, de préférence, supérieure à 1 s, 5 s ou 10 s. Ici, pendant toute l'étape 102, l'unité 52 maintient le circuit 50 dans l'état bloqué pendant une durée suffisante pour que la température du condensateur 26 s'équilibre avec la température du fluide caloporteur qui circule à l'intérieur de la canalisation 16. On considère ici que les températures sont équilibrées si elles sont égales à plus ou moins 20 % près et, de préférence, à plus ou moins 10 % près. Sur les figures 6 à 9, les pointillés sur l'axe des temps lors des états bloqués indiquent que la durée complète de l'état bloqué n'a pas été représentée.

Lors d'une étape 104, il est mis fin à l'état bloqué en commandant la fermeture de l'interrupteur K2. Pour cela, par exemple, une tension $V_{GS}$ entre la grille et la source de l'interrupteur K2 égale à - $V_{dd}$ est appliquée. On passe alors dans l'état de restitution au condensateur 26 de l'énergie stockée dans le condensateur 28. La fermeture de l'interrupteur K2 provoque la circulation du courant i du condensateur 28 vers le condensateur 26 à travers la diode D1 et l'interrupteur K2.

Cela provoque également une baisse de la tension $V_2$ et une augmentation de la tension $V_1$ et donc une baisse de la température de la couche 36 du condensateur 28 et une augmentation de la température de la couche 36 du condensateur 26.

Tant que le courant circule du condensateur 28 vers le condensateur 26, la position de l'interrupteur K1 n'a pas d'importance car c'est la diode D1 qui conduit. Par contre, au plus tard au prochain instant où l'intensité du courant i s'annule, l'interrupteur K1 doit être ouvert afin d'empêcher que le condensateur 28 recommence à se charger immédiatement après s'être déchargé. Ici, l'interrupteur K1 commute dans sa position ouverte en même temps que l'interrupteur K2 commute dans sa position fermée, c'est-à-dire au début de l'étape 104.

Dans ces conditions, au prochain instant où le courant i s'annule, la diode D1 interrompt la circulation du courant i. On bascule donc automatiquement, lors d'une étape 106, dans un nouvel état bloqué du circuit 50. Typiquement, la durée de l'étape 104 et donc de l'état de restitution est strictement inférieure à 100 ms et, souvent, de moins de 1 ms ou 100 $\mu$s. Pour sortir de cet état bloqué et revenir à l'étape 100, il faut fermer l'interrupteur K1. Lors de l'étape 106, le circuit 50 est maintenu dans cet état bloqué pendant une durée supérieure à 100 ms et de préférence supérieure à 1, 5 ou 10 s. Ici, le circuit 50 est maintenu dans cet état bloqué pendant une durée égale à la durée de l'étape 102. Ensuite, le procédé retourne à l'étape 100.

Pendant toute la durée de l'étape 106, la position de l'interrupteur K2 n'a pas d'importance. Par exemple ici, l'interrupteur K2 est dans sa position fermée.

La succession des étapes 100, 102, 104 et 106 forme un cycle complet de transfert d'énergie entre les condensateurs 26, 28.

En parallèle des étapes 100 et 102, lors d'une étape 108, l'unité 52 commande la pompe 20 pour faire circuler le fluide caloporteur dans la canalisation 16 de l'échangeur 12 vers l'échangeur 14. Ainsi, le fluide caloporteur se refroidit au contact du condensateur 26 pour atteindre une température inférieure à celle du milieu 6. Ensuite, le fluide caloporteur ainsi refroidi traverse l'échangeur 14 pour refroidir à son tour le milieu 6.

En parallèle, le fluide caloporteur circule, dans la canalisation 18, de l'échangeur 14 vers l'échangeur 12. Lors de cette circulation, le fluide caloporteur se réchauffe au contact du condensateur 28 pour atteindre une température supérieure à celle du milieu 4. Ce fluide caloporteur ainsi réchauffé est ensuite refroidi lorsqu'il traverse l'échangeur 12 pour atteindre, en sortie de l'échangeur 12, une température constante égale à celle du milieu 4.

En parallèle des étapes 104 et 106, lors d'une étape 110, l'unité 52 commande la pompe 20 pour inverser le sens de circulation du fluide caloporteur. Dès lors, il circule dans la canalisation 16 en allant de l'échangeur 14 vers l'échangeur 12. Le fonctionnement du système 2 pendant cette étape 110 est identique à celui décrit lors de l'étape 108 sauf que le condensateur 28 refroidit le fluide calorifique et le condensateur 26 le réchauffe. De plus, puisque le sens de circulation du fluide calorifique a été inversé, le fluide calorifique refroidi circule toujours du milieu 4 vers le milieu 6, ce qui permet de continuer à refroidir ce milieu 6 et de maintenir ce milieu 6 à une température inférieure à celle du milieu 4.

L'écart entre la température $T_i$ du milieu 6 et la température $T_e$ du milieu 4 est fonction de l'amplitude de la variation de température de la couche 36 en matériau électrocalorique.

L'unité 52 commande également les sources 72 et 82 de tension pour qu'elles rechargent les condensateurs 26 et 28. A cet effet, elles génèrent uniquement une tension de même sens que le courant i. Ici, la valeur des tensions $V_1$ et $V_2$ et la durée d'alimentation est choisie, lors du démarrage du module 24, pour charger progressivement ces condensateurs 26 et 28 même si ces condensateurs étaient initialement complètement déchargés. Ensuite, les tensions $V_1$ et $V_2$ permettent de compenser les pertes d'énergie électrique lors du fonctionnement du module 24. Ces pertes d'énergie électrique sont essentiellement de deux types, à savoir :

- les pertes d'énergie électrique causées par les imperfections des composants électroniques utilisés pour le transfert de l'énergie électrique entre les condensateurs 26 et 28, et

- les pertes d'énergie électrique causées par le fait qu'une partie de cette énergie électrique est utilisée par les condensateurs 26 et 28 pour modifier la température de leur couche en matériau électrocalorique.

Ici, en parallèle de l'étape 100, lors d'une étape 112, l'unité 52 commande la source 72 pour qu'elle génère une tension positive pendant toute la durée de l'étape 100. Ensuite, cette commande peut aussi être maintenue pendant toute la durée de l'étape 102. Ceci n'a pas d'importance puisque pendant l'étape 102, l'intensité du courant i est nulle. Dans ce mode de réalisation particulier, la commande de la source 72 est donc maintenue jusqu'au début de l'étape 104.

En parallèle de l'étape 104, lors d'une étape 114, l'unité 52 commande la source 82 pour générer une tension $V_2$ strictement supérieure à zéro pendant toute la durée de l'étape 104. Ceci permet de recharger le condensateur 28. Ensuite, cette commande de la source 82 peut être maintenue pendant toute l'étape 106. Comme précédemment, ceci n'a pas d'importance puisque l'intensité du courant i est nulle pendant l'étape 106. Ici, cette commande est donc maintenue jusqu'au début de l'étape 100.

Le chronogramme des tensions générées par les sources 72 et 82 est représenté sur la figure 9. Le signal Gen1 correspond au signal généré sur la sortie de la source 72 et le signal Gen2 correspond au signal généré sur la sortie de la source 82.

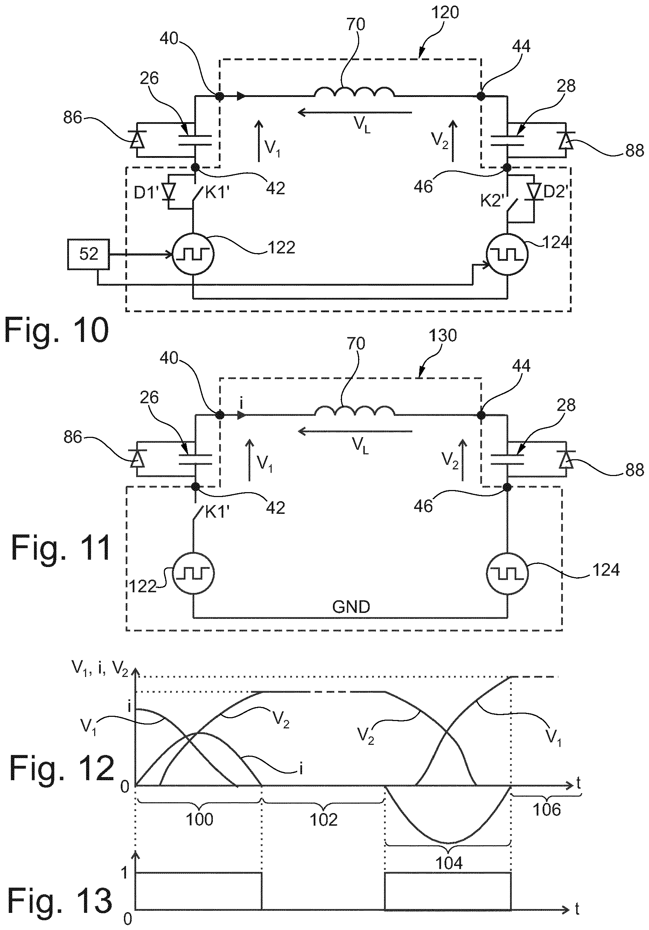

La figure 10 représente un circuit 120 de transfert. Ce circuit 120 est identique au circuit 50 sauf que :

- les sources 72 et 82 sont remplacées par des sources 122 et 124 commandables de tension continue,

- les interrupteurs K1 et K2 sont remplacés, respectivement, par des interrupteurs K1' et K2', et

- les diodes D1 et D2 sont remplacées, respectivement, par des diodes D1' et D2'.

Les sources 122 et 124 sont commandables indépendamment l'une de l'autre contrairement aux sources 72 et 82. Cela permet de gérer plus finement la charge des condensateurs 26 et 28. Par exemple, la source 122 génère une tension strictement supérieure à zéro uniquement pendant une partie de la durée de l'étape 100 et non plus pendant toute la durée de cette étape. La source 122 peut aussi être commandée pour charger le condensateur 26 à une fréquence strictement inférieure à celle des cycles de transfert d'énergie entre les condensateurs 26 et 28. Par exemple, la source 122 est commandée pour ne charger le condensateur 26 qu'un cycle sur deux ou sur trois. La source 124 est commandée de façon similaire à la source 122.

Ici, la position des interrupteurs K1', K2' et des diodes D1' et D2' est inversée par rapport aux positions, respectivement, des interrupteurs K1, K2 et des diodes D1 et D2 du circuit 50. Par conséquent, les interrupteurs K1' et K2' sont directement raccordés, respectivement, aux bornes 42 et 46. L'anode des diodes D1' et D2' est directement raccordée, respectivement, aux bornes 42 et 46.

Dans ce mode de réalisation, les interrupteurs K1' et K2' sont commandables indépendamment l'un de l'autre. Ainsi, les interrupteurs K1' et K2' peuvent être simultanément ouverts pendant les étapes 102 et 106 ou K1' peut être ouvert uniquement à la fin de l'étape 104. Dans ce mode de réalisation, les interrupteurs K1' et K2' ne sont pas nécessairement des transistors PMOS. Par exemple, il peut s'agir de transistors IGBT (« insulated-gate bipolar transistor ») ou d'autres types d'interrupteurs commandables comme des relais mécaniques. Dans ce mode de réalisation, typiquement, les diodes D1' et D2' sont des diodes ajoutées aux bornes des interrupteurs commandables et non pas des diodes parasites de ces interrupteurs.

Le fonctionnement du circuit 120 de transfert et sa commande se déduit des explications données en référence au procédé de la figure 5.

La figure 11 représente un circuit 130 de transfert identique au circuit 120 sauf que les diodes D1', D2' et l'interrupteur K2' sont omis. Puisque ces diodes D1', D2' et l'interrupteur K2' sont omis, le basculement vers l'état bloqué quand le condensateur 26 ou 28 a fini de se décharger ne se produit pas automatiquement mais doit être provoqué par l'ouverture de l'interrupteur K1'. Pour obtenir les formes d'onde des tensions $V_1$, $V_2$ et de l'intensité du courant i représentées sur la figure 12, il faut commander l'ouverture et la fermeture de l'interrupteur K1' comme représenté sur le chronogramme de la figure 13. Ici, les formes d'onde représentées sur la figure 12 sont identiques à celles représentées sur la figure 6.

Ce mode de réalisation du circuit de transfert est plus simple. Toutefois, il n'est pas facile de déterminer l'instant précis où l'intensité du courant i s'annule. Ainsi, la commande de ce circuit 130 peut s'avérer plus complexe que celle du circuit 50.

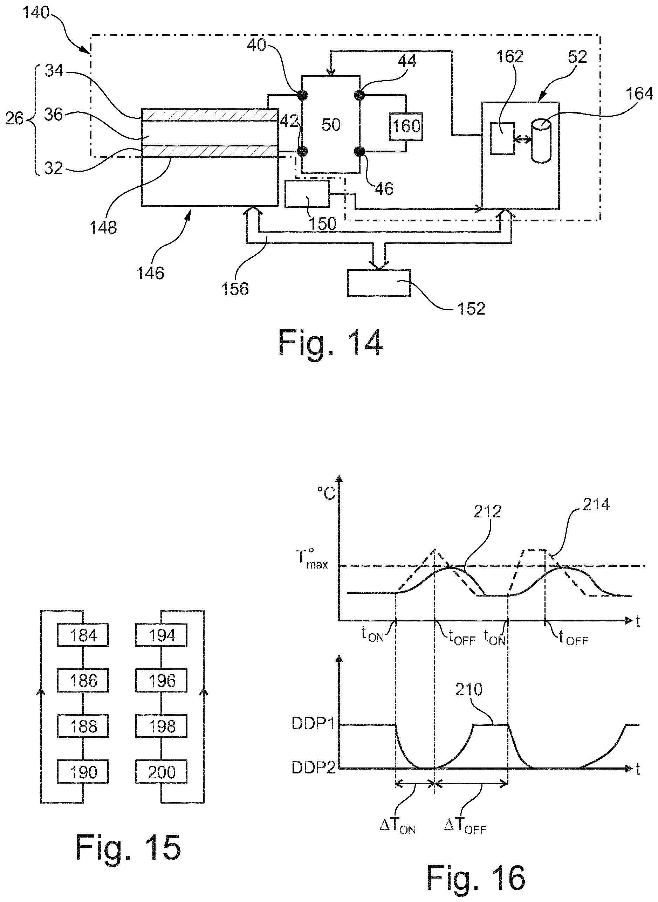

La figure 14 représente un module 140 pour réchauffer et, en alternance, refroidir un composant électronique 146 de manière à limiter l'amplitude des variations de température de ce composant.

Le composant 146 est ici un composant électronique et, par exemple, un circuit intégré. Typiquement ce circuit intégré comprend une multitude de commutateurs électroniques commandables aptes chacun à commuter entre une position ouverte et une position fermée pour réaliser une fonction prédéfinie. Dans la position ouverte, le commutateur laisse difficilement passer le courant. A l'inverse, dans la position fermée, le commutateur laisse facilement passer le courant. Lors de chaque commutation entre les positions ouverte et fermée, une partie de l'énergie électrique reçue par le commutateur est transformée en chaleur. Dans la position fermée, une partie de l'énergie qui traverse le commutateur peut aussi être transformée en chaleur si ce commutateur présente une résistance non nul dans cette position. Par conséquent, le composant 146 produit de la chaleur quand il est utilisé. A l'inverse, il n'en produit pas lorsqu'il n'est pas utilisé.

Quand le composant 146 doit être refroidi, on dit qu'il est dans l'état actif. Au contraire, quand le composant 146 peut être réchauffé, on dit qu'il est dans l'état passif. Le basculement entre ces états passif et actif est détecté à partir de valeurs acquises de la quantité Q de chaleur produite par seconde par le composant 146 et/ou à partir de valeurs acquises de la température T du composant 146. Dans ce mode de réalisation, l'état actif est détecté dès que le composant 146 produit une quantité Q de chaleur par seconde supérieure à un seuil prédéterminé $Q_1$, exprimé en Watt, et que sa température T est supérieure à un seuil prédéterminé $T_1$. Au contraire, quand le composant 146 produit une quantité Q de chaleur par seconde inférieure à ce seuil $Q_1$ ou a une température T inférieure au seuil $T_1$, on détecte que le composant est dans l'état passif.

Typiquement, dans l'état passif, le composant 146 n'est pas utilisé ou très peu utilisé. Par très peu utilisé, on désigne par exemple la situation où le composant 146 est en veille.

Le composant 146 est commandable et peut être basculé, en alternance, entre son état actif et son état passif.

Ici, le composant 146 est associé à une température maximale $T_{max}$. Typiquement, la température $T_{max}$ correspond à une température au-delà de laquelle le composant 146 risque d'être endommagé ou au-delà de laquelle ses performances se dégradent. Le seuil $T_1$ est strictement inférieur à cette température $T_{max}$.

Ici, la valeur du seuil $Q_1$ est choisie strictement supérieure à zéro et, par exemple, supérieur à 0,1 mW ou 1mW ou 10mW.

Le composant 146 est conçu pour que l'essentiel de la chaleur qu'il produit soit évacuée par l'intermédiaire d'une face 148 d'évacuation de chaleur. Ici, la face 148 est la face supérieure du composant 146.

Un capteur 150 est prévu pour mesurer la température T du composant 146. Ce capteur 150 est raccordé à l'unité 52 de commande.

Le composant 146 bascule entre ses états actif et passif en réponse à des événements extérieurs acquis par l'intermédiaire d'une interface 152. Ici, c'est la réception de ces événements qui est utilisée pour détecter que la quantité Q de chaleur produite par seconde est supérieure au seuil $Q_1$. Autrement dit, la réception de ces événements est utilisée comme étant une grandeur physique représentative de la quantité de chaleur produite par seconde par le composant 146. Plus précisément, dans ce mode de réalisation la réception d'un événement déclenchant un fonctionnement intensif du composant 146 indique que la quantité de chaleur qu'il produit pas seconde dépasse le seuil $Q_1$. A l'inverse, dès qu'un événement arrêtant le fonctionnement intensif ou mettant en veille le composant 146 est reçu sur l'interface 152, on considère que la quantité Q est inférieure au seuil $Q_1$. Cette façon de procéder permet d'éviter d'avoir recours à un capteur de quantité de chaleur produite par seconde.

Par exemple, l'interface 152 est une interface homme-machine ou une prise de raccordement à un réseau de transmission d'informations ou autre. L'interface 152 est raccordée au composant 146 par l'intermédiaire d'un bus 156 de transmission d'informations.

Le module 140 est identique au module 24 sauf que le condensateur électrocalorique 28 est remplacé par un dispositif 160 de stockage d'énergie électrique. Par exemple, le dispositif 160 est un condensateur de même capacité que le condensateur 28 mais dépourvu de propriété électrocalorique. L'électrode 32 du condensateur 26 est en contact thermique par conduction avec la face 148 du composant 146.

Dans ce mode de réalisation, l'unité 52 de commande est réalisée à l'aide d'un calculateur électronique programmable 162 apte à exécuter des instructions enregistrées sur un support d'enregistrement d'informations. A cet effet, l'unité 52 comporte également une mémoire 164 comportant les instructions nécessaires pour exécuter le procédé de la figure 15.

Le fonctionnement du module 140 va maintenant être décrit à l'aide du procédé de la figure 15 et des chronogrammes de la figure 16.

Lors d'une étape 184, le composant 146 reçoit un événement d'activation à un instant $t_{on}$. Cet événement est reçu par l'intermédiaire de l'interface 152 et du bus 156.

Lors d'une étape 186, immédiatement en réponse, le composant 146 passe dans un mode de fonctionnement intensif. Ensuite, il reste dans ce mode de fonctionnement intensif pendant toute la durée de l'intervalle de temps $\Delta T_{on}$. Typiquement, cet intervalle de temps dure plus de 1 ms et, généralement, plus de 100 ms ou 1s. Sa durée est par contre généralement inférieure à une heure ou 5 minutes.

Ensuite, lors d'une étape 188, le composant 146 reçoit un événement de désactivation à un instant $t_{off}$. Cet événement est reçu par l'intermédiaire de l'interface 152 et du bus 156.

Lors d'une étape 190, immédiatement en réponse, le composant 146 passe en veille. Ensuite, il reste en veille pendant toute la durée de l'intervalle $\Delta T_{off}$. La durée de l'intervalle $\Delta T_{off}$ est généralement supérieure ou égale à la durée de l'intervalle $\Delta T_{on}$. En veille, les échanges thermiques avec l'environnement extérieur sont suffisants pour faire diminuer sa température jusqu'à ce que celle-ci se stabilise autour de la température ambiante.

A l'issue de l'étape 190, le procédé retourne à l'étape 184. Ainsi, puisque les événements d'activation et de désactivation sont reçus en alternance, le composant 146 alterne régulièrement entre un mode de fonctionnement intensif et la veille.

En parallèle, lors d'une étape 194, à l'instant $t_{on}$, l'unité 52 détecte le basculement vers l'état actif. Pour cela, ici, elle détecte la réception de l'événement d'activation et acquière la température mesurée par le capteur 150. La réception de l'événement d'activation est interprétée comme signifiant que la quantité Q de chaleur produite par seconde par le composant 146 est supérieure au seuil $Q_1$. Si la température est inférieure au seuil $T_1$, le basculement vers l'état actif n'est pas détecté. Dans ce cas, l'unité 52 acquière à intervalle régulier la température T pour détecter un basculement ultérieur du composant 146 vers l'état actif. Si la température T acquise est supérieure au seuil $T_1$, l'état actif du composant 146 est détecté. En réponse à cette détection, l'unité 52 commande le circuit 50 pour diminuer la différence de potentiels entre les électrodes 32 et 34 du condensateur 26. A cet effet, l'étape 100 précédemment décrite est exécutée. Cette diminution de la différence de potentiels provoque une baisse de la température du matériau électrocalorique qui est transmise, par conductivité thermique, au composant électrique 146. Cette baisse de température limite ou annule l'augmentation de la température du composant 146 lorsque celui-ci est dans son état actif.

Ici, la tension V1 diminue de la valeur DDP1 à la valeur DDP2 (Figue 16, chronogramme du bas).

Ensuite, lors d'une étape 196, l'unité 52 maintient la différence de potentiels égale à cette valeur DDP2 tant que le basculement du composant 146 vers l'état passif n'est pas détecté. Pour cela, l'étape 102 précédemment décrit est exécutée et le circuit 50 est maintenu dans l'état bloqué jusqu'à ce que le basculement du composant 146 vers l'état passif soit détecté

Ensuite, lors d'une étape 198, l'unité 52 détecte le basculement du composant 146 de l'état actif vers l'état passif. Comme lors de l'étape 194, pour cela, l'unité 52 détecte la réception de l'événement de désactivation du composant 146 à l'instant $t_{off}$. En même temps, l'unité 52 acquière la valeur mesurée par la capteur 150. Tant que la valeur mesurée de la température T est supérieure au seuil $T_1$, le basculement dans l'état passif n'est pas détecté.

A l'inverse, dès que la valeur mesurée de la température T descend en-dessous du seuil $T_1$, le basculement dans l'état passif est détecté. En réponse, l'unité 52 commande le circuit 50 pour augmenter à nouveau la différence de potentiels entre les électrodes 32 et 34. Pour cela, l'étape 104 précédemment décrite est exécutée. Cette augmentation provoque une augmentation de la température de la couche 36 et, par conductivité thermique, limite la diminution de la température du composant 146. Ici, la tension $V_1$ augmente de la valeur DDP2 à la valeur DDP1.

Lors d'une étape 200, quand la différence de potentiels atteint à nouveau la valeur DDP1, l'unité 52 maintient cette différence de potentiels à cette valeur tant que le composant 146 reste dans l'état passif. Pour cela, l'étape 106 précédemment décrite est exécutée. À l'issue de cette étape 200, le procédé retourne alors à l'étape 194.

La figure 16 représente deux chronogrammes l'un au-dessus de l'autre. Dans le chronogramme du dessous, une ligne 210 représente l'évolution au cours du temps de la tension $V_1$ lorsque le procédé de la figure 15 est mis en oeuvre.

Dans le chronogramme du dessus, une ligne en trait plein 212 représente l'évolution de la température du composant 146 lorsque le procédé de la figure 15 est mis en oeuvre. Une ligne 214 en pointillés représente la température du composant 146 dans le cas où le procédé de la figure 15 n'est pas mis en oeuvre. Comme le montre la ligne 214, si le procédé de la figure 15 n'est pas mis en oeuvre, la température du composant 146 dépasse la température $T_{max}$. A l'inverse, si le procédé de la figure 15 est mis en oeuvre, la température du composant 146 ne dépasse pas cette température $T_{max}$.

Ainsi, le procédé de la figure 15 permet de limiter les variations de température du composant 146 mais ne permet pas de diminuer sa température moyenne sur une longue durée.

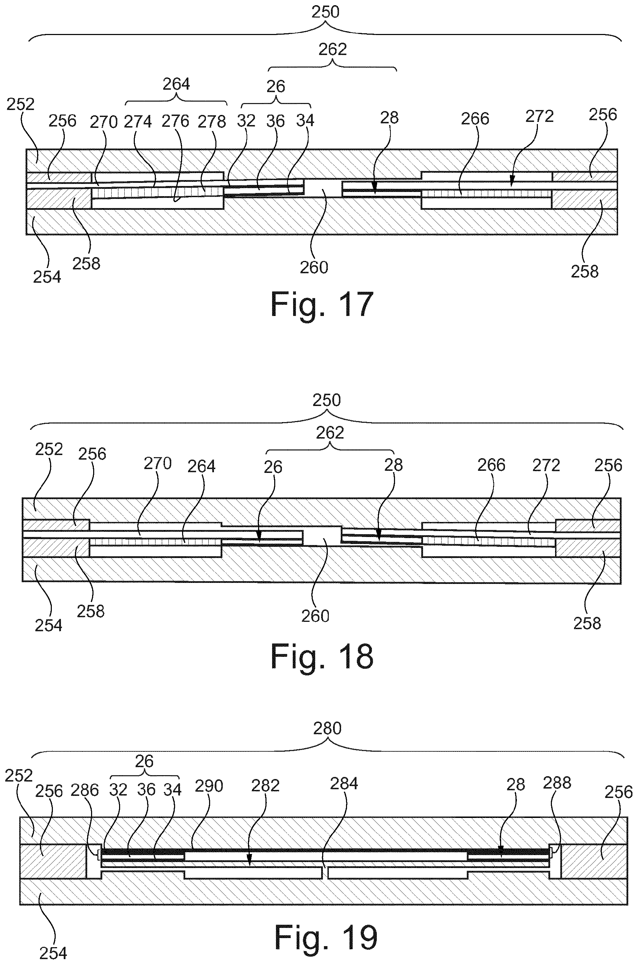

Les figures 17 et 18 représentent un système 250 de transfert d'énergie thermique entre des milieux 252 et 254. Dans ce mode de réalisation, les milieux 252 et 254 sont des milieux à l'état solide. Ils se présentent ici chacun sous la forme d'une couche horizontale.

Ces milieux 252, 254 sont isolés thermiquement l'un de l'autre :

- par deux couches 256, 258 en matériau thermiquement isolant, c'est-à-dire mauvais conducteur thermique, et
- par une cavité 260.

De préférence, le vide est réalisé à l'intérieur de la cavité 260. A cet effet, elle est hermétiquement isolée de tout milieu extérieur.

Le système 250 comprend un module 262 apte à réchauffer le milieu 254 et, en alternance, à refroidir le milieu 252. Ce module 262 est réalisé conformément aux enseignements précédemment donnés. Ainsi, ce module n'est pas décrit ici plus en détail. De plus, pour simplifier les figures 17 et 18, seuls les condensateurs 26 et 28 de ce module 262 ont été représentés.

Dans ce mode de réalisation, le dispositif de transport apte à raccorder thermiquement, en alternance, les condensateurs 26 et 28 aux milieux 252 et 254 comprend deux actionneurs électromécaniques 264 et 266. Ici, l'actionneur 264 est apte à déplacer le condensateur 26 entre :

- une position de repos, représentée sur la figure 17, dans laquelle le condensateur 26 est raccordé par conduction thermique avec le milieu 252, et
- une position active, représentée sur la figure 18, dans laquelle le condensateur 26 est raccordé par conduction thermique avec le milieu 254.

De façon similaire, l'actionneur 266 est apte à déplacer le condensateur 28 entre :

- une position de repos, représentée sur la figure 18, dans laquelle le condensateur 28 est raccordé par conduction thermique avec le milieu 252, et
- une position active, représentée sur la figure 17, dans laquelle le condensateur 28 est raccordé par conduction thermique avec le milieu 254.

Pour cela, le dispositif de transport comprend aussi deux poutres mobiles 270 et 272 logées à l'intérieur de la cavité 260. Les condensateurs 26 et 28 sont fixés sans aucun degré de liberté sur une extrémité libre, respectivement, des poutres 270 et 272. L'extrémité opposée de chaque poutre est ancrée sans aucun degré de liberté entre les couches 256 et 258. Ces poutres s'étendent essentiellement horizontalement.

Ici, les actionneurs 264 et 266 sont aptes à fléchir, respectivement, les poutres 270 et 272 pour déplacer les condensateurs 26 et 28 entre leurs positions active et de repos. Dans ce mode de réalisation, les actionneurs 264 et 266 sont des actionneurs piézoélectriques. Par exemple, l'actionneur 264 comporte deux électrodes 274 et 276 entre lesquelles est interposée une couche 278 en matériau piézoélectrique. Les électrodes 274, 276 et la couche 278 sont fixées sans aucun degré de liberté sur la poutre 270 et s'étendent essentiellement parallèlement à cette poutre dans le sens de sa plus grande longueur. De plus, ici, les électrodes 274 et 276 sont électriquement raccordées en permanence, respectivement, aux électrodes 32 et 34 du condensateur 26 de manière à ce que l'application d'une différence de potentiels entre les électrodes 32 et 34 provoque simultanément :

- un réchauffement de la couche 36, et
- une déformation de la couche 278 qui fléchit la poutre 270 pour déplacer le condensateur 26 de sa position de repos vers sa position active.

L'actionneur 266 est identique à l'actionneur 264 sauf qu'il est fixé sur la poutre 272 est ses électrodes sont électriquement raccordées en permanence à celles du condensateur 28. Il ne sera donc pas décrit plus en détail.

Lors du fonctionnement du système 250, le module 262 fonctionne comme décrit précédemment. Toutefois, en plus, lors de l'étape 100 la diminution de la tension entre les électrodes du condensateur 26 provoque, simultanément, son déplacement de sa position active vers sa position de repos. En parallèle, le condensateur 28 se déplace de sa position de repos vers sa position active en s'échauffant. Dans l'état bloqué qui suit, les condensateurs 26 et 28 restent, respectivement, dans les positions de repos et active. Ensuite, lors de l'étape 104, les condensateurs 26 et 28 sont déplacés par les actionneurs 264 et 266 en sens inverse de ce qui se passe lors de l'étape 100. Enfin, pendant toute la durée de l'état bloqué suivant, les condensateurs 26 et 28 restent, respectivement, dans les positions active et de repos. Ce cycle de déplacement peut être réitéré un grand nombre de fois. Lors de chaque cycle, les condensateurs 26 et 28 transportent de la chaleur du milieu 252 vers le milieu 254.

La figure 19 représente un système 280 de transfert d'énergie thermique entre les milieux 252 et 254. Le système 280 est identique au système 250 sauf que :

- la couche isolante 258 est omise,
- les poutres 270, 272 sont remplacées par un balancier 282 monté en rotation autour d'un axe central 284, et
- les actionneurs piézoélectriques 264, 266 sont remplacés par des actionneurs électrostatiques 286, 288.

Les condensateurs 26 et 28 sont fixés sans aucun degré de liberté à une extrémité respective du balancier 282. L'électrode 32 de chacun de ces condensateurs est tournée vers la couche 252. L'axe central 284 s'étend horizontalement parallèlement aux plans des couches 252 et 254. Ici, il passe par le centre de gravité du balancier 282.

L'actionneur 286 comprend l'électrode 32, la couche 252 et un film 290 déposé sur la couche 252 en vis-à-vis des électrodes 32 de chacun des condensateurs 26, 28. Le film 290 est réalisé en matériau électriquement isolant et bon conducteur thermique. La couche 252 et le balancier 282 sont réalisés en matériau électriquement conducteur ou semi-conducteur. Ici, la couche 252 et le balancier 282 sont raccordés électriquement à la masse. Dès lors, quand une tension positive, supérieure à celle présente au même instant sur l'électrode 32 du condensateur 28, est appliquée sur l'électrode 32 du condensateur 26 alors une force électrostatique déplace le condensateur 26 vers une position de repos dans laquelle son électrode 32 est directement en contact avec le film 290. Ce déplacement entraîne également le déplacement du condensateur 28 vers une position active dans laquelle son électrode vient en contact thermique par conduction avec la couche 254.

Le déplacement inverse du balancier 282 est obtenu en appliquant une tension positive sur l'électrode 32 du condensateur 28 supérieure à celle appliquée au même instant sur l'électrode 32 du condensateur 26. Le reste du fonctionnement du module 262 est identique à ce qui a été décrit précédemment.

De nombreux autres modes de réalisation sont possibles. Par exemple, les interrupteurs tels que les interrupteurs K1 et K2 peuvent être des transistors MOSFET, JFET, bipolaire, IGBT ou même des relais mécaniques.

Pour simplifier le circuit de transfert, et à la différence du module selon l'invention, l'inductance 70 peut être omise. Dans ce cas, les pertes d'énergie lors du transfert de l'énergie électrique entre le condensateur électrocalorique et le dispositif de stockage d'énergie augmentent sensiblement, ce qui réduit l'efficacité de ce module. Toutefois, même sans cette inductance, l'efficacité de ce module reste très nettement supérieure à celle des modules connus dans lesquels l'énergie électrique stockée dans le condensateur électrocalorique n'est pas réutilisée lors d'un cycle ultérieur. Ce mode de réalisation, sans inductance, permet donc de réduire très sensiblement l'encombrement du circuit de transfert au détriment d'une diminution de l'efficacité du module.

Quel que soit le mode de réalisation du circuit de transfert, l'unité de commande peut être réalisée sous la forme décrite en référence à la figure 14.

Le système 2 peut être utilisé pour réchauffer le milieu intérieur plutôt que de le refroidir. Pour cela, il suffit d'inverser les commandes décrites en référence aux chronogrammes des figures 6 à 9. Autrement dit, il faut commander le circuit 50 de manière à réchauffer le fluide caloporteur qui se dirige vers le milieu 6 au lieu de le refroidir comme précédemment décrit.

Les milieux intérieur et extérieur peuvent être des solides ou des liquides.

Le module 24 du système 2 peut être remplacé par un premier et un second modules distincts. Le premier module est uniquement utilisé pour réchauffer et, en alternance refroidir l'intérieur de la canalisation 16 tandis que le second module est uniquement utilisé pour réchauffer et, en alternance refroidir l'intérieur de la canalisation 18. Ces premier et second modules sont par exemple identiques, au module 140 décrit en référence à la figure 14. Ainsi, il est possible de commander un refroidissement ou un réchauffement d'une des canalisations 16 et 18 indépendamment du refroidissement ou du réchauffement commandé dans l'autre de ces canalisations. En d'autres termes, cela permet aussi de ne plus faire fonctionner en opposition de phase les premier et second modules.

Dans le système 2, la canalisation 16 peut être omise. Par exemple, elle est remplacée par un premier et un second réservoirs distincts de fluide caloporteur.

Lorsque la pompe 20 aspire le fluide caloporteur de l'échangeur 12 vers l'échangeur 14 à travers la canalisation 18, le premier réservoir se vide et le second réservoir se remplit. A l'inverse, lorsque la pompe 20 aspire le fluide caloporteur de l'échangeur 14 vers l'échangeur 12, c'est le second réservoir qui se vide tandis que le premier réservoir se remplit. Le fonctionnement de ce système sans seconde canalisation se déduit ensuite de ce qui a été expliqué précédemment. De plus, dans le cas particulier où la canalisation 16 est omise, le condensateur électrocalorique 26 peut être remplacé par n'importe quel dispositif de stockage d'énergie électrique tel qu'un condensateur électrique dépourvu de propriété électrocalorique. De plus, ce dispositif de stockage d'énergie électrique peut être disposé n'importe où dans le module pour réchauffer et refroidir.

Dans le module 140, le dispositif 160 peut aussi être un condensateur électrocalorique ou une batterie ou tout autre moyen de stockage d'énergie électrique.

Les condensateurs 26 et 28 ne sont pas nécessairement identiques. Par exemple, en variante, ils n'ont pas la même capacité. Ceci ne change pas le fonctionnement décrit précédemment si ce n'est la valeur des tensions observées entre les électrodes de ces condensateurs électrocaloriques. De plus, dans ce cas, le condensateur de plus grande capacité ne se décharge jamais complètement.

Pour être raccordé par conduction thermique avec le fluide caloporteur, les condensateurs 26, 28 peuvent aussi être fixés sur la face extérieure des parois des canalisations et non pas à l'intérieur de ces canalisations. Dans ce cas, de préférence, les parois des canalisations sont réalisées dans un matériau bon conducteur thermique.

D'autres modes de réalisation du condensateur 26 ou 28 sont possibles. Par exemple, un tel condensateur peut aussi être réalisé comme décrit dans l'article A5. Dans cet article, le condensateur est réalisé selon le procédé traditionnel de fabrication des condensateurs multicouches. Le condensateur 26 ou 28 peut aussi être réalisé comme les condensateurs films formés en enroulant un film multicouche réalisé par la superposition d'une couche métallique, de la couche diélectrique et d'une autre couche métallique. Les couches métalliques correspondent aux électrodes. Dans ce cas, l'épaisseur de la couche diélectrique est souvent supérieure à 2 $\mu$m ou 5 $\mu$m et, de préférence, inférieure à 148 $\mu$m ou 15 $\mu$m.

Chaque condensateur électrocalorique peut être formé d'un seul bloc capacitif ou, au contraire, de plusieurs blocs capacitifs raccordés en parallèle ou en série les uns aux autres. Il est aussi possible de remplacer le condensateur électrocalorique par plusieurs condensateurs électrocaloriques raccordés en parallèle ou en série. En particulier, le module peut comporter aussi bien dans la canalisation 16 que dans la canalisation 18 plusieurs condensateurs électrocaloriques en série et/ou parallèle.

En variante, un matériau électrocalorique négatif peut être utilisé pour réaliser la couche 36 des condensateurs électrocaloriques. L'unité 52 de commande doit alors être adapté pour provoquer une augmentation de tension entre les électrodes de ce condensateur quand on souhaite refroidir le fluide caloporteur et une baisse de cette tension entre ces mêmes électrodes quand on souhaite réchauffer le fluide caloporteur. En tenant compte de cette remarque et des enseignements précédemment décrits, il est possible de réaliser des systèmes de transfert d'énergie thermique utilisant des condensateurs à matériau électrocalorique négatif plutôt que des condensateurs à matériau électrocalorique positif comme précédemment décrit.

En variante, le circuit de transfert ne comporte qu'une seule source. L'une des sources 72 ou 82 de tension est omise. Dans ce cas, un seul des deux condensateurs est rechargé mais cela n'empêche pas de compenser les pertes du circuit 50 et donc d'obtenir un fonctionnement stable.

Dans une autre variante, les sources de tension ne sont pas raccordées en série avec les condensateurs à recharger mais en parallèle des électrodes de ces condensateurs.

Dans un autre mode de réalisation, les diodes 86 et 88 sont omises. Cela n'empêche pas le fonctionnement du système de transfert d'énergie thermique. Toutefois, la tension aux bornes de l'un des condensateurs 26 et 28 devient alors progressivement négative alors que la tension aux bornes de l'autre de ces condensateurs devient alors progressivement positive. Les tensions $V_1$ et $V_2$ sont alors de signe opposé.

Le système 250 de transfert d'énergie thermique peut être simplifié en omettant l'actionneur 266 et la poutre 272. Dans ce cas, le condensateur 28 est remplacé par un dispositif de stockage d'énergie électrique dépourvu de propriété électrocalorique.

D'autres modes de réalisation des actionneurs 264, 266, 286, 288 sont également possibles. Par exemple, un actionneur électromagnétique ou thermique peut être utilisé.

En variante, les actionneurs déplacent les couches 252 et 254 au lieu de déplacer les condensateurs 26 et 28 de manière à transférer la chaleur d'une couche vers l'autre.

Il n'est pas nécessaire que les actionneurs des systèmes 250, 280 soit raccordés en série avec les électrodes des condensateurs 26 et 28. En variante, les actionneurs sont alimentés à partir d'un circuit électrique électriquement indépendant de celui comportant les condensateurs 26 et 28.

Contrairement au module selon l'invention, système 250 ou 280 peut aussi être mis en oeuvre sans utiliser de dispositif de stockage d'énergie pour récupérer puis réutiliser l'énergie emmagasinée dans le condensateur électrocalorique. Dans ce dernier cas, le circuit de transfert d'énergie électrique et/ou le dispositif de stockage d'énergie électrique sont omis.

## Revendications

**1.** Module pour réchauffer et, en alternance, pour refroidir, ce module comportant à cet effet :

- au moins un condensateur électrocalorique (26),
- un dispositif (28 ; 160) de stockage d'énergie électrique,
- un circuit (50 ; 120 ; 130) commandable de transfert d'énergie électrique entre le condensateur électrocalorique et le dispositif de stockage d'énergie,

**caractérisé en ce que** :

- le circuit (50 ; 120 ; 130) commandable de transfert d'énergie électrique comporte une inductance (70) raccordée entre le condensateur électrocalorique et le dispositif de stockage et au moins un interrupteur commandable de manière à faire basculer, en alternance, le circuit entre :

• un état de récupération d'énergie dans lequel il laisse circuler, à travers l'inductance, le courant du condensateur électrocalorique vers le dispositif de stockage d'énergie de manière à diminuer la tension entre des électrodes du condensateur électrocalorique tout en transférant au moins une partie de l'énergie accumulée dans le condensateur électrocalorique vers le dispositif de stockage d'énergie,
• un état bloqué dans lequel il isole électriquement le condensateur électrocalorique et le dispositif de stockage d'énergie, et
• un état de restitution d'énergie dans lequel il laisse circuler, à travers l'inductance, le courant du dispositif de stockage d'énergie vers le condensateur électrocalorique de manière à augmenter la tension entre les électrodes du condensateur électrocalorique en transférant l'énergie stockée dans le dispositif de stockage d'énergie vers le condensateur électrocalorique, et

- une unité (52) de commande du circuit de transfert, cette unité étant programmée pour commander l'interrupteur de manière à faire basculer le circuit de transfert successivement dans les états suivants et dans l'ordre suivant : l'état de récupération d'énergie, l'état bloqué, l'état de restitution d'énergie et l'état bloqué, et pour maintenir à chaque fois le circuit de transfert dans l'état bloqué pendant une durée strictement supérieure à la durée de l'état de récupération et strictement supérieure à la durée de l'état de restitution.

**2.** Module selon la revendication 1, dans lequel :

• le circuit (50 ; 120 ; 130) de transfert comporte une source (72, 82 ; 122, 124) de tension continue commandable, raccordée en série avec le condensateur électrocalorique, cette source étant apte à générer une tension continue supérieure ou égale à zéro et, en alternance une tension continue inférieure ou égale à zéro et,
• l'unité de commande est programmée pour commander cette source de tension pour qu'elle génère une tension continue supérieure ou égale à zéro tant que l'intensité du courant qui traverse le condensateur électrocalorique est supérieure à zéro et, en alternance, pour qu'elle génère une tension inférieure ou égale zéro tant que l'intensité du courant qui traverse le condensateur électrocalorique est inférieure à zéro, la tension continue générée quand l'intensité du courant est supérieure à zéro ou inférieure à zéro étant différente de zéro.

**3.** Module selon la revendication 2, dans lequel une diode (86) est raccordée en parallèle du condensateur électrocalorique (26) de manière à empêcher l'apparition d'une tension négative entre les électrodes de ce condensateur électrocalorique.

**4.** Module selon l'une quelconque des revendications précédentes, dans lequel le circuit de transfert comporte :

- un premier interrupteur (K1 ; K1') commandable raccordé en série avec une première diode (D2 ; D2'), et
- un second interrupteur (K2 ; K2') commandable raccordé en série avec une seconde diode (D1 ; D1'), les première et seconde diodes (D2, D1 ; D2', D1') étant raccordées en parallèle entre les bornes, respectivement, du second et du premier interrupteurs (K2, K1 ; K2', K1') et les première et seconde diodes étant raccordées en série en sens inverse l'une de l'autre.

**5.** Module selon l'une quelconque des revendications précédentes, dans lequel

- le dispositif (28 ; 160) de stockage d'énergie comporte un condensateur pour stocker de l'énergie, et
- l'inductance (70) est raccordée entre le condensateur électrocalorique et le condensateur du dispositif de stockage d'énergie.

**6.** Module selon l'une quelconque des revendications précédentes, dans lequel le dispositif (28 ; 160) de stockage d'énergie électrique a une capacité de stockage d'énergie électrique supérieure ou égale à la capacité du condensateur électrocalorique.

7. Module selon l'une quelconque des revendications précédentes, dans lequel le dispositif (28) de stockage d'énergie comporte un condensateur électrocalorique pour stocker de l'énergie.

8. Système de transfert d'énergie thermique entre un milieu dit « chaud » et un milieu dit « froid » isoler thermiquement l'un de l'autre, ce système comportant :

   - au moins un module commandable (24) pour réchauffer et, en alternance, pour refroidir,
   - un dispositif de transport apte à raccorder thermiquement le module au milieu chaud lorsque ce module réchauffe et, en alternance, au milieu froid lorsque le module refroidit,

   **caractérisé en ce que** le module (24) est conforme à l'une quelconque des revendications précédentes.

9. Système selon la revendication 8, dans lequel :

   - le dispositif de transport comporte un circuit fluidique contenant :

     • un premier échangeur thermique (12) en contact direct avec le milieu chaud,
     • un second échangeur thermique (14) en contact direct avec le milieu froid,
     • au moins une canalisation (16, 18) raccordant fluidiquement entre eux les premier et second échangeurs thermiques,
     • une pompe (20) commandable apte à faire circuler dans un sens et, en alternance dans un sens opposé, un fluide caloporteur à l'intérieur de cette canalisation, et

   - le condensateur électrocalorique (26) du module est situé à l'intérieur de la canalisation (16) ou en contact direct avec une paroi de cette canalisation pour réchauffer et, en alternance, refroidir la canalisation de manière à refroidir et, en alternance, à réchauffer le liquide caloporteur qui circule à l'intérieur de cette canalisation.

10. Système selon la revendication 9, dans lequel :

    - le dispositif de transport comprend une première et une seconde canalisations (16, 18), la première canalisation (16) raccordant fluidiquement une sortie du premier échangeur thermique à une entrée du second échangeur thermique, la seconde canalisation (18) raccordant fluidiquement une sortie du second échangeur thermique à une entrée du premier échangeur thermique,

    - le dispositif de stockage d'énergie du module comprend un autre condensateur électrocalorique (28) situé à l'intérieur de la seconde canalisation (18) ou en contact direct avec une paroi de cette seconde canalisation, et
    - l'unité (52) de commande du module est également programmée pour commander la pompe (20) de manière à inverser le sens de circulation du liquide caloporteur à chaque fois que le circuit de transfert passe de l'état bloqué vers l'état de restitution et de l'état bloqué vers l'état de récupération.

11. Système selon la revendication 8, dans lequel le dispositif de transport comporte un mécanisme (264, 266 ; 286, 288) apte déplacer, en alternance, le condensateur électrocalorique du module par rapport aux milieux chaud et froid entre :

    - une première position dans laquelle le condensateur électrocalorique est directement en contact avec le milieu chaud, et thermiquement isolé du milieu froid, et
    - une seconde position dans laquelle le condensateur électrocalorique est directement en contact avec le milieu froid et thermiquement isolé du milieu chaud.

12. Procédé pour réchauffer et, en alternance, pour refroidir à l'aide :

    - d'au moins un condensateur électrocalorique,
    - d'un dispositif de stockage d'énergie électrique,
    - d'un circuit commandable de transfert d'énergie électrique entre le condensateur électrocalorique et le dispositif de stockage d'énergie,
    procédé **caractérisée en ce que** le circuit comporte une inductance raccordée entre le condensateur électrocalorique et le dispositif de stockage et au moins un interrupteur commandable de manière à faire basculer, en alternance, le circuit entre :

      • un état de récupération d'énergie dans lequel il laisse circuler, à travers l'inductance, le courant du condensateur électrocalorique vers le dispositif de stockage d'énergie de manière à diminuer la tension entre des électrodes du condensateur électrocalorique tout en transférant au moins une partie de l'énergie accumulée dans le condensateur électrocalorique vers le dispositif de stockage d'énergie,
      • un état bloqué dans lequel il isole électriquement le condensateur électrocalorique et le dispositif de stockage d'énergie, et

• un état de restitution d'énergie dans lequel il laisse circuler, à travers l'inductance, le courant du dispositif de stockage d'énergie vers le condensateur électrocalorique de manière à augmenter la tension entre les électrodes du condensateur électrocalorique en transférant l'énergie stockée dans le dispositif de stockage d'énergie vers le condensateur électrocalorique, le procédé comportant la commande (100, 104 ; 194, 198) de l'interrupteur du circuit de transfert pour faire basculer ce circuit de transfert successivement dans les états suivants et dans l'ordre suivant : l'état de récupération d'énergie, l'état bloqué, l'état de restitution d'énergie et l'état bloqué, et pour maintenir à chaque fois le circuit de transfert dans l'état bloqué pendant une durée strictement supérieure à la durée de l'état de récupération et strictement supérieure à la durée de l'état de restitution.

13. Procédé selon la revendication 12, dans lequel le procédé comporte la commande (112, 114) d'une source de tension continue raccordée en série avec le condensateur électrocalorique de manière à ce que cette source de tension génère une tension continue supérieure ou égale à zéro tant que l'intensité du courant qui traverse le condensateur électrocalorique est supérieure à zéro et, en alternance, génère une tension inférieure ou égale zéro tant que l'intensité du courant qui traverse le condensateur électrocalorique est inférieure à zéro, la tension continue générée quand l'intensité du courant est supérieure à zéro ou inférieure à zéro étant différente de zéro.

14. Support (164) d'enregistrement d'informations, **caractérisé en ce qu'**il comporte des instructions pour l'exécution d'un procédé conforme à l'une quelconque des revendications 12 à 13, lorsque ces instructions sont exécutées par un calculateur électronique.

15. Module selon l'une quelconque des revendications 1 à 7 ou procédé selon la revendication 12, dans lequel l'état bloqué dure plus de 100 ms.

16. Module selon l'une quelconque des revendications 1 à 7 ou procédé selon l'une quelconque des revendications 12 à 13, dans lequel le condensateur électrocalorique (26, 28) comporte deux électrodes (32, 34) isolées mécaniquement et électriquement l'une de l'autre par une couche (36) en matériau diélectrique, la couche (36) en matériau diélectrique étant réalisée dans un matériau qui est à la fois diélectrique et électrocalorique.

17. Module ou procédé selon la revendication 16, dans lequel le matériau qui est à la fois diélectrique et électrocalorique présente une variation maximale ΔTmax de température en réponse à un champ électrique au moins de 5°C.

18. Module ou procédé selon la revendication 17, dans lequel les électrodes (32, 34) sont réalisées dans un matériau dont la conductivité thermique à 22°C est supérieure à 2 W.m$^{-1}$.K$^{-1}$.

19. Module ou procédé selon la revendication 18, dans lequel les électrodes (32, 34) sont des électrodes métalliques.

**Patentansprüche**

1. Modul zum abwechselnden Erwärmen und Abkühlen, wobei dieses Modul hierzu Folgendes umfasst:

- wenigstens einen elektrokalorischen Kondensator (26),
- eine Vorrichtung (28; 160) zum Speichern von elektrischer Energie,
- eine steuerbare Schaltung (50; 120; 130) zum Übertragen von elektrischer Energie zwischen dem elektrokalorischen Kondensator und der Energiespeichervorrichtung,

**dadurch gekennzeichnet, dass**:

- die steuerbare Schaltung (50; 120; 130) zum Übertragen von elektrischer Energie eine zwischen den elektrokalorischen Kondensator und die Speichervorrichtung geschaltete Induktivität (70) und wenigstens einen Unterbrecher umfasst, wobei der Unterbrecher so gesteuert werden kann, dass er die Schaltung abwechselnd hin und her schaltet zwischen:

• einem Energierückgewinnungszustand, in dem sie den Strom des elektrokalorischen Kondensators durch die Induktivität zu der Energiespeichervorrichtung fließen lässt, derart, dass die Spannung zwischen den Elektroden des elektrokalorischen Kondensators verringert wird und dabei wenigstens ein Teil der in dem elektrokalorischen Kondensator angesammelten Energie zu der Energiespeichervorrichtung übertragen wird,
• einem blockierten Zustand, in dem sie den elektrokalorischen Kondensator und die Energiespeichervorrichtung elektrisch isoliert, und
• einem Energiewiederherstellungszustand, in dem sie den Strom der Energiespeichervorrichtung durch die Induktivität zu dem elektrokalorischen Kondensator fließen lässt, derart, dass die Spannung zwischen den Elektroden des elektrokalorischen Kondensators erhöht wird und dabei in der Energiespeichervorrichtung gespeicherte Energie zu dem elektrokalorischen Kondensator übertragen wird, und

- eine Einheit (52) zum Steuern der Übertragungsschaltung, wobei diese Einheit programmiert ist, um den Unterbrecher in der Weise zu steuern, dass er die Übertragungsschaltung nacheinander zwischen den folgenden Zuständen und in der folgenden Reihenfolge umschaltet: dem Energierückgewinnungszustand, dem blockierten Zustand, dem Energiewiederherstellungszustand und dem blockierten Zustand, um jedes Mal die Übertragungsschaltung während einer Dauer, die streng größer als die Dauer des Rückgewinnungszustands und streng größer als die Dauer des Wiederherstellungszustands ist, in dem blockierten Zustand zu halten.

2. Modul nach Anspruch 1, wobei:

• die Übertragungsschaltung (50; 120; 130) eine steuerbare Gleichspannungsquelle (72, 82; 122, 124) enthält, die mit dem elektrokalorischen Kondensator in Reihe geschaltet ist, wobei diese Quelle abwechselnd eine Gleichspannung, die größer oder gleich null ist, und eine Gleichspannung, die kleiner oder gleich null ist, erzeugen kann, und
• die Steuereinheit programmiert ist, um diese Spannungsquelle so zu steuern, dass sie abwechselnd eine Gleichspannung größer oder gleich null erzeugt, solange die Stärke des Stroms, der durch den elektrokalorischen Kondensator fließt, größer als null ist, und eine Spannung erzeugt, die kleiner oder gleich null ist, solange die Stärke des Stroms, der durch den elektrokalorischen Kondensator fließt, kleiner als null ist, wobei die Gleichspannung, die erzeugt wird, wenn die Stromstärke größer als null oder kleiner als null ist, von null verschieden ist.

3. Modul nach Anspruch 2, wobei zu dem elektrokalorischen Kondensator (26) eine Diode (86) parallel geschaltet ist, derart, dass das Auftreten einer negativen Spannung zwischen den Elektroden dieses elektrokalorischen Kondensators verhindert wird.

4. Modul nach einem der vorhergehenden Ansprüche, wobei die Übertragungsschaltung Folgendes umfasst:

- einen ersten steuerbaren Unterbrecher (K1; K1'), der mit einer ersten Diode (D2; D2') in Reihe geschaltet ist, und
- einen zweiten steuerbaren Unterbrecher (K2; K2'), der mit einer zweiten Diode (D1; D1') in Reihe geschaltet ist, wobei die erste und die zweite Diode (D2, D1; D2', D1') zwischen den Anschlüssen des zweiten bzw. des ersten Unterbrechers (K2, K1; K2', K1') parallel geschaltet sind und die ersten und zweiten Dioden in umgekehrtem Richtungssinn in Reihe geschaltet sind.

5. Modul nach einem der vorhergehenden Ansprüche, wobei

- die Energiespeichervorrichtung (28; 160) einen Kondensator zum Speichern von Energie enthält und
- die Induktivität (70) zwischen den elektrokalorischen Kondensator und den Kondensator der Energiespeichervorrichtung geschaltet ist.

6. Modul nach einem der vorhergehenden Ansprüche, wobei die Vorrichtung (28; 160) zum Speichern von elektrischer Energie eine Kapazität zum Speichern von elektrischer Energie besitzt, die größer oder gleich der Kapazität des elektrokalorischen Kondensators ist.

7. Modul nach einem der vorhergehenden Ansprüche, wobei die Energiespeichervorrichtung (28) einen elektrokalorischen Kondensator zum Speichern von Energie enthält.

8. System zum Übertragen von Wärmeenergie zwischen einem sogenannten "heißen" Medium und einem sogenannten "kalten" Medium, die thermisch voneinander isoliert sind, wobei dieses System Folgendes umfasst:

- wenigstens ein steuerbares Modul (24) zum abwechselnden Erwärmen und Abkühlen,
- eine Transportvorrichtung, die das Modul abwechselnd mit dem heißen Medium, wenn dieses Modul erwärmt, und mit dem kalten Medium, wenn dieses Modul abkühlt, verbinden kann,

**dadurch gekennzeichnet, dass** das Modul (24) wie in einem der vorhergehenden Ansprüche angegeben beschaffen ist.

9. System nach Anspruch 8, wobei

- die Transportvorrichtung einen Fluidkreis umfasst, der Folgendes enthält:

• einen ersten Wärmetauscher (12) in direktem Kontakt mit dem heißen Medium,

• einen zweiten Wärmetauscher (14) in direktem Kontakt mit dem kalten Medium,

• wenigstens eine Leitung (16, 18), die eine fluidtechnische Verbindung zwischen dem ersten und dem zweiten Wärmetauscher herstellt,

• eine steuerbare Pumpe (20), die ein wärmeführendes Fluid in dieser Leitung abwechselnd in einem Richtungssinn und in einem entgegengesetzten Richtungssinn umwälzen kann, und

- der elektrokalorische Kondensator (26) des Moduls sich in der Leitung (16) oder in direktem Kontakt mit einer Wand dieser Leitung befindet, um die Leitung abwechselnd zu erwärmen und abzukühlen, derart, dass die wärmeführende Flüssigkeit, die in dieser Leitung zirkuliert, abwechselnd abgekühlt und erwärmt wird.

10. System nach Anspruch 9, wobei

- die Transportvorrichtung eine erste und eine zweite Leitung (16, 18) enthält, wobei die erste Leitung (16) einen Ausgang des ersten Wärmetauschers fluidtechnisch mit einem Eingang des zweiten Wärmetauschers verbindet und wobei die zweite Leitung (18) einen Ausgang des zweiten Wärmetauschers fluidtechnisch mit einem Eingang des ersten Wärmetauschers verbindet,
- die Energiespeichervorrichtung des Moduls einen anderen elektrokalorischen Kondensator (28) enthält, der sich in der zweiten Leitung (18) oder in direktem Kontakt mit einer Wand dieser zweiten Leitung befindet, und
- die Steuereinheit (52) des Moduls außerdem programmiert ist, um die Pumpe in der Weise zu steuern, dass die Umwälzrichtung der wärmeführenden Flüssigkeit jedes Mal umgekehrt wird, wenn die Übertragungsschaltung von dem blockierten Zustand in den Wiederherstellungszustand und von dem blockierten Zustand in den Wiedergewinnungszustand übergeht.

11. System nach Anspruch 8, wobei die Transportvorrichtung einen Mechanismus (264, 266; 286, 288) umfasst, der den elektrokalorischen Kondensator des Moduls in Bezug auf das heiße Medium und das kalte Medium abwechselnd verlagern kann zwischen:

- einer ersten Position, in der der elektrokalorische Kondensator direkt mit dem heißen Medium in Kontakt und von dem kalten Medium thermisch isoliert ist, und

- einer zweiten Position, in der der elektrokalorische Kondensator direkt mit dem kalten Medium in Kontakt und von dem heißen Medium thermisch isoliert ist.

12. Verfahren zum abwechselnden Erwärmen und Abkühlen mit Hilfe

- wenigstens eines elektrokalorischen Kondensators,
- einer Vorrichtung zum Speichern von elektrischer Energie,

- einer steuerbaren Schaltung zum Übertragen von elektrischer Energie zwischen dem elektrokalorischen Kondensator und der Energiespeichervorrichtung,

wobei das Verfahren **dadurch gekennzeichnet ist, dass** die Schaltung eine Induktivität, die zwischen den elektrokalorischen Kondensator und die Speichervorrichtung geschaltet ist, und wenigstens einen Unterbrecher umfasst, wobei der Unterbrecher in der Weise steuerbar ist, dass er die Schaltung abwechselnd umschaltet zwischen:

• einem Energiewiedergewinnungszustand, in dem sie den Strom des elektrokalorischen Kondensators durch die Induktivität zu der Energiespeichervorrichtung fließen lässt, derart, dass die Spannung zwischen den Elektroden des elektrokalorischen Kondensators verringert wird und dabei wenigstens ein Teil der in dem elektrokalorischen Kondensator angesammelten Energie zu der Energiespeichervorrichtung übertragen wird,

• einem blockierten Zustand, in dem sie den elektrokalorischen Kondensator und die Energiespeichervorrichtung elektrisch isoliert, und

• einem Energiewiederherstellungszustand, in dem sie den Strom von der Energiespeichervorrichtung durch die Induktivität zu dem elektrokalorischen Kondensator fließen lässt, derart, dass die Spannung zwischen den Elektroden des elektrokalorischen Kondensators erhöht wird und dabei die in der Energiespeichervorrichtung gespeicherte Energie zu dem elektrokalorischen Kondensator übertragen wird,

wobei das Verfahren das Steuern (100, 104; 194, 198) des Unterbrechers der Übertragungsschaltung umfasst, um diese Übertragungsschaltung nacheinander zwischen den folgenden Zuständen und in der folgenden Reihenfolge umzuschalten: dem Energiewiedergewinnungszustand, dem blockierten Zustand, dem Energiewiederherstellungszustand und dem blockierten Zustand, und um die Übertragungsschaltung jedes Mal während einer Dauer, die streng größer als die Dauer des Wiedergewinnungszustands und streng größer als die Dauer des Wiederherstellungszustands ist, im blockierten Zustand zu halten.

13. Verfahren nach Anspruch 12, wobei das Verfahren das Steuern (112, 114) einer Gleichspannungsquelle, die mit dem elektrokalorischen Kondensator in Reihe geschaltet ist, umfasst, derart, dass diese Spannungsquelle abwechselnd eine Gleichspannung größer oder gleich null erzeugt, solange die Stärke des Stroms, der durch den elektrokalorischen Kondensator fließt, größer als null ist, und eine Spannung erzeugt, die kleiner oder gleich null ist, solange die Stärke des Stroms, der durch den elektrokalorischen Kondensator fließt, kleiner als null ist, wobei die Gleichspannung, die erzeugt wird, wenn die Stromstärke größer als null oder kleiner als null ist, von null verschieden ist.

14. Datenaufzeichnungsträger (164), **dadurch gekennzeichnet, dass** er Befehle für die Ausführung eines Verfahrens nach einem der Ansprüche 12 bis 13 enthält, wenn diese Befehle von einem elektronischen Rechner ausgeführt werden.

15. Modul nach einem der Ansprüche 1 bis 7 oder Verfahren nach Anspruch 12, wobei der blockierte Zustand mehr als 100 ms dauert.

16. Modul nach einem der Ansprüche 1 bis 7 oder Verfahren nach einem der Ansprüche 12 bis 13, wobei der elektrokalorische Kondensator (26, 28) zwei Elektroden (32, 34) enthält, die durch eine Schicht (36) aus dielektrischem Material mechanisch und elektrisch voneinander isoliert sind, wobei die Schicht (36) aus dielektrischem Material aus einem Material hergestellt ist, die sowohl dielektrisch als auch elektrokalorisch ist.

17. Modul oder Verfahren nach Anspruch 16, wobei das Material, das sowohl dielektrisch als auch elektrokalorisch ist, in Reaktion auf ein elektrisches Feld eine maximale Temperaturschwankung $\Delta T_{max}$ von weniger als 5 °C aufweist.

18. Modul oder Verfahren nach Anspruch 17, wobei die Elektroden (32, 34) aus einem Material hergestellt sind, dessen spezifische Wärmeleitfähigkeit bei 22 °C größer als $2 W \cdot m^{-1} \cdot K^{-1}$ ist.

19. Modul oder Verfahren nach Anspruch 18, wobei die Elektroden (32, 34) metallische Elektroden sind.

## Claims

1. Module for warming and, alternately, for cooling, this module comprising for this purpose:

   - at least one electrocaloric capacitor (26),
   - an electrical energy storage device (28; 160),
   - a controllable circuit (50; 120; 130) for transferring electrical energy between the electrocaloric capacitor and the energy storage device,

   **characterized in that**:

   - the controllable circuit (50; 120; 130) for transferring electrical energy comprises an inductor (70) connected between the electrocaloric capacitor and the storage device and at least one controllable breaker so as to toggle the circuit, alternately, between:

     • an energy recovery state in which it lets the current of the electrocaloric capacitor flow, through the inductor, to the energy storage device so as to decrease the voltage between electrodes of the electrocaloric capacitor while transferring at least part of the energy accumulated in the electrocaloric capacitor to the energy storage device,
     • a disabled state in which it electrically isolates the electrocaloric capacitor and the energy storage device, and
     • an energy release state in which it lets the current of the energy storage device flow, through the inductor, to the electrocaloric capacitor so as to increase the voltage between the electrodes of the electrocaloric capacitor by transferring the energy stored in the energy storage device to the electrocaloric capacitor, and

   - a control unit (52) for the transfer circuit, this unit being programmed to control the breaker so as to cause the transfer circuit to toggle successively into the following states and in the following order: the energy recovery state, the disabled state, the energy release state and the disabled state, and each time to maintain the transfer circuit in the disabled state for a duration strictly greater than the duration of the recovery state and strictly greater than the duration of the release state.

2. Module according to Claim 1, in which:

• the transfer circuit (50; 120; 130) comprises a controllable DC voltage source (72, 82; 122, 124), connected in series with the electrocaloric capacitor, this source being able to generate a DC voltage of greater than or equal to zero and, alternately a DC voltage of less than or equal to zero and,

• the control unit is programmed to control this voltage source so that it generates a DC voltage of greater than or equal to zero as long as the intensity of the current which passes through the electrocaloric capacitor is greater than zero and, alternately, so that it generates a voltage of less than or equal to zero as long as the intensity of the current which passes through the electrocaloric capacitor is less than zero, the DC voltage generated when the intensity of the current is greater than zero or less than zero being different from zero.

3. Module according to Claim 2, in which a diode (86) is connected in parallel with the electrocaloric capacitor (26) so as to prevent the appearance of a negative voltage between the electrodes of this electrocaloric capacitor.

4. Module according to any one of the preceding claims, in which the transfer circuit comprises:

   - a first controllable breaker (K1; K1') connected in series with a first diode (D2; D2'), and
   - a second controllable breaker (K2; K2') connected in series with a second diode (D1; D1'), the first and second diodes (D2, D1; D2', D1') being connected in parallel between the terminals, respectively, of the second and of the first breakers (K2, K1; K2', K1') and the first and second diodes being connected in series in mutually reverse directions.

5. Module according to any one of the preceding claims, in which

   - the energy storage device (28; 160) comprises a capacitor for storing energy, and
   - the inductor (70) is connected between the electrocaloric capacitor and the capacitor of the energy storage device.

6. Module according to any one of the preceding claims, in which the electrical energy storage device (28; 160) has an electrical energy storage capacity greater than or equal to the capacitance of the electrocaloric capacitor.

7. Module according to any one of the preceding claims, in which the energy storage device (28) comprises an electrocaloric capacitor for storing energy.

8. System for transferring thermal energy between a so-called "hot" medium and a so-called "cold" medium thermally insulated from one another, this system comprising:

   - at least one controllable module (24) for warming and, alternately, for cooling,
   - a transport device able to thermally connect the module to the hot medium when this module warms and, alternately, to the cold medium when the module cools,

   **characterized in that** the module (24) complies with any one of the preceding claims.

9. System according to Claim 8, in which:

   - the transport device comprises a fluidic circuit containing:

     • a first heat exchanger (12) in direct contact with the hot medium,
     • a second heat exchanger (14) in direct contact with the cold medium,
     • at least one pipe (16, 18) fluidically interconnecting the first and second heat exchangers,
     • a controllable pump (20) able to cause the flow in one direction and, alternately in an opposite direction, of a heat-transfer fluid inside this pipe, and

   - the electrocaloric capacitor (26) of the module is situated inside the pipe (16) or in direct contact with a wall of this pipe for warming and, alternately, cooling the pipe so as to cool and, alternately, to warm the heat-transfer liquid which flows inside this pipe.

10. System according to Claim 9, in which:

   - the transport device comprises a first and a second pipe (16, 18), the first pipe (16) fluidically connecting an output of the first heat exchanger to an input of the second heat exchanger, the second pipe (18) fluidically connecting an output of the second heat exchanger to an input of the first heat exchanger,
   - the energy storage device of the module comprises another electrocaloric capacitor (28) situated inside the second pipe (18) or in direct contact with a wall of this second pipe, and
   - the control unit (52) of the module is also programmed to control the pump (20) so as to reverse the direction of flow of the heat-transfer liquid each time that the transfer circuit passes from the disabled state to the release state and from the disabled state to the recovery state.

**11.** System according to Claim 8, in which the transport device comprises a mechanism (264, 266; 286, 288) able to displace, alternately, the electrocaloric capacitor of the module with respect to the hot and cold media between:

- a first position in which the electrocaloric capacitor is directly in contact with the hot medium, and thermally insulated from the cold medium, and
- a second position in which the electrocaloric capacitor is directly in contact with the cold medium and thermally insulated from the hot medium.

**12.** Method for warming and, alternately, for cooling with the aid:

- of at least one electrocaloric capacitor,
- of an electrical energy storage device,
- of a controllable circuit for transferring electrical energy between the electrocaloric capacitor and the energy storage device,

said method being **characterized in that** the circuit comprises an inductor connected between the electrocaloric capacitor and the storage device and at least one controllable breaker so as to toggle the circuit, alternately, between:

• an energy recovery state in which it lets the current of the electrocaloric capacitor flow, through the inductor, to the energy storage device so as to decrease the voltage between electrodes of the electrocaloric capacitor while transferring at least part of the energy accumulated in the electrocaloric capacitor to the energy storage device,
• a disabled state in which it electrically isolates the electrocaloric capacitor and the energy storage device, and
• an energy release state in which it lets the current of the energy storage device flow, through the inductor, to the electrocaloric capacitor so as to increase the voltage between the electrodes of the electrocaloric capacitor by transferring the energy stored in the energy storage device to the electrocaloric capacitor,

the method comprising the control (100, 104; 194, 198) of the breaker of the transfer circuit so as to cause this transfer circuit to toggle successively into the following states and in the following order: the energy recovery state, the disabled state, the energy release state and the disabled state, and each time to maintain the transfer circuit in the disabled state for a duration strictly greater than the duration of the recovery state and strictly greater than the duration of the release state.

**13.** Method according to Claim 12, in which the method comprises the control (112, 114) of a DC voltage source connected in series with the electrocaloric capacitor in such a way that this voltage source generates a DC voltage of greater than or equal to zero as long as the intensity of the current which passes through the electrocaloric capacitor is greater than zero and, alternately, generates a voltage of less than or equal to zero as long as the intensity of the current which passes through the electrocaloric capacitor is less than zero, the DC voltage generated when the intensity of the current is greater than zero or less than zero being different from zero.

**14.** Support (164) for recording information, **characterized in that** it comprises instructions for the execution of a method in accordance with either one of Claims 12 and 13, when these instructions are executed by an electronic computer.

**15.** Module according to any one of Claims 1 to 7 or method according to Claim 12, in which the disabled state lasts more than 100 ms.

**16.** Module according to any one of Claims 1 to 7 or method according to any one of Claims 12 to 13, in which the electrocaloric capacitor (26, 28) comprises two electrodes (32, 34) mechanically and electrically isolated from one another by a layer (36) of dielectric material, the layer (36) of dielectric material being made of a material which is both dielectric and electrocaloric.

**17.** Module or method according to Claim 16, in which the material which is both dielectric and electrocaloric has a maximum temperature variation $\Delta Tmax$ in response to an electric field of at least 5°C.

**18.** Module or method according to Claim 17, in which the electrodes (32, 34) are made of a material of which the thermal conductivity at 22°C is greater than $2W.m^{-1}.K^{-1}$.

**19.** Module or method according to Claim 18, in which the electrodes (32, 34) are metallic electrodes.

Fig. 1

Fig. 5

Fig. 2

Fig. 3

Fig. 4

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2635431 A
- SU 840621 A1
- WO 2012026924 A1
- US 2012056504 A1
- US 6877325 B1

**Littérature non-brevet citée dans la description**

- **Y.V. SINYAVSKY ; N.D PASHKOV ; Y.M. GOROVOY ; G.E LUGANSKY.** The optical ferroelectric ceramic as working boby for electrocaloric refrigeration. *Ferroelectrics,* 1989, vol. 90, 213-217
- **A.F. MISCHENKO ; Q. ZHANG ; J.F. SCOTT ; R.W. WHATMORE ; N.D. MATHUR.** Giant electrocaloric effect in thin-film PbZr0,95 Ti0,05 O. *science,* 03 Mars 2006, vol. 311
- **S.G. LU ; B.R. ROZIC ; Q.M. ZHANG ; Z.KUTNJAK ; XINYU LI ; E.FURMAN ; LEE J ; GORNY et al.** Organic and inorganic relaxor ferroelectrics with giant electrocaloric effect. *Applied Physics Letters,* 2010, vol. 97, 162904
- **T.M. CORREIA ; J.S. YOUNG ; R.W. WHATMORE ; J.F. SCOTT ; N.D. MATHUR ; Q. ZHANG.** *Applied Physics Letters,* 2009, vol. 95, 182904
- **S. KAR-NARAYAN ; N.D. MATHUR.** Predicted cooling powers for multilayer capacitors based on various electrocaloric and electrode materials. *Applied Physics Letters,* 2009, vol. 95, 242903